(19) Europäisches Patentamt / European Patent Office / Office européen des brevets

(11) **EP 4 186 689 A1**

(12) **EUROPEAN PATENT APPLICATION**
published in accordance with Art. 153(4) EPC

(43) Date of publication:
**31.05.2023 Bulletin 2023/22**

(21) Application number: **21846376.8**

(22) Date of filing: **14.07.2021**

(51) International Patent Classification (IPC):
**B32B 9/00** (2006.01)   **B32B 27/32** (2006.01)
**B65D 65/40** (2006.01)

(52) Cooperative Patent Classification (CPC):
**B32B 9/00; B32B 27/32; B65D 65/40;** Y02W 30/80

(86) International application number:
**PCT/JP2021/026453**

(87) International publication number:
**WO 2022/019192 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.07.2020 JP 2020124590**

(71) Applicant: **TOYOBO CO., LTD.**
**Osaka-shi**
**Osaka 5300001 (JP)**

(72) Inventors:
• **YAMAZAKI, Atsushi**
  **Inuyama-shi, Aichi 484-8508 (JP)**
• **NAKANO, Mahiro**
  **Inuyama-shi, Aichi 484-8508 (JP)**
• **SUGIMORI, Koichi**
  **Inuyama-shi, Aichi 484-8508 (JP)**
• **KASHIWA, Mitsuhiro**
  **Inuyama-shi, Aichi 484-8508 (JP)**

(74) Representative: **Vossius & Partner**
**Patentanwälte Rechtsanwälte mbB**
**Siebertstraße 3**
**81675 München (DE)**

(54) **LAMINATED FILM**

(57)    An object is to provide a laminated film that is a film permitting formation of a laminate constitution constituted almost completely of a single type of resin having little environmental impact made up primarily of polypropylene film, and that has adhesive properties and gas barrier properties sought for packaging materials. Means for solving it relates to a laminated film comprising a surface layer (B) at a surface on one side of a substrate layer (A) comprising a polypropylenic resin as primary constituent, and a surface layer (C) at a surface on the other side of the substrate layer (A), and in which an inorganic thin film layer (D) is further laminated over the surface layer (B), the laminated film being characterized in that haze of the laminated film is not greater than 5%, and in that a surface on the inorganic thin film layer (D) side of the laminated film satisfies (I) through (IV), below; (I) arithmetic mean roughness (Ra) by a scanning probe microscope is not less than 4.5 nm -9.0 nm; (II) Martens hardness is not greater than 310 N/mm$^2$; (III) water contact angle is not greater than 75°; and (IV) center plane average roughness (SRa) by a three-dimensional profilometer is not less than 0.010 $\mu$m - 0.040 $\mu$m.

EP 4 186 689 A1

**Description**

TECHNICAL FIELD

The present invention relates to a laminated film. More specifically, it relates to a gas barrier lamination film which has little environmental impact during manufacture and at the time of disposal, and which is provided with both excellent gas barrier performance and adhesive strength between/among the respective layers thereof such as will make it adequate for use as a packaging material.

Not only in Europe but in various countries around the world, regulations directed toward reduced use of disposable plastics have intensified in recent years. The backdrop for this includes a heightened level of international awareness toward recycling of resources and the increasing seriousness of the problem of trash in developing countries. For this reason, with respect to packaging materials that are made of plastic and that are in demand for foods, pharmaceutical agents, and so forth as well, there is demand for products that are environmentally responsive from the standpoint of the 3Rs (recycle, reuse, reduce).

As properties sought for the aforementioned environmentally friendly packaging materials, (1) that they comprise materials such as will permit them to be easily recycled, (2) that they exhibit gas barrier performance such as will permit them to block various gases and prolong shelf life, (3) that they permit laminate constitutions such as will allow them to have little environmental impact (e.g., as a result of nonuse of organic solvent or due to the fact that the amount of material itself is small, or as a result of having been made recyclable due to monomaterial use), and so forth may be cited.

To make it possible to achieve (2) and (3), above, use of polypropylene film has attracted attention in recent years. Polypropylene film is employed for general use in a wide variety of applications where it is used as film for surface protection, for electrical insulation, and for packaging of foods and a wide variety of products and so forth. By virtue of its molecular structure, polypropylene film is capable of exhibiting good water vapor barrier properties. Moreover, as sealant for lamination with surface substrate film, because polypropylenic and polyethylenic heat seal resins are in common use, it is for example possible by using polypropylene film as surface substrate, and unstretched polypropylene sheeting as sealant, to achieve monomaterial construction for the overall packaging material while causing this to possess gas barrier properties, and it will be possible to attain a packaging material design that permits easy recycling and that is otherwise environmentally friendly.

However, regarding the gas barrier properties at (2), above, while polypropylene film does have water vapor barrier properties, there have been problems in that the values thereof are inadequate as compared for example with transparent inorganic vapor deposition polyester film which is typically thought to have excellent water vapor barrier properties, and in that the oxygen barrier properties thereof are extremely poor. To address this, films in which polypropylene film is laminated with polyvinyl alcohol, ethylene-vinyl alcohol copolymer, polyvinylidene chloride resin, polyacrylonitrile, or another such high-molecular-weight polymer resin composition commonly believed to have comparatively good oxygen barrier properties have come to be used (see, for example, Patent Reference Nos. 1 through 3).

However, because the humidity dependency of gas barrier coating films employing high-molecular-weight polymer resin compositions such as the aforementioned polyvinyl alcohol or ethylene-vinyl alcohol copolymer is large, the gas barrier properties thereof worsen under conditions of high humidity, and these can hardly be described as adequate in terms of their water vapor barrier properties or water-resistant adhesive properties. Furthermore, while the humidity dependencies of polyvinylidene chloride resin and polyacrylonitrile are low, these have had problems in that the water vapor barrier properties thereof have not been adequate, and in that the hazard due to generation of harmful substances when these are discarded/incinerated has been large.

Moreover, to achieve adequate barrier performance, it has been necessary with all of the aforementioned barrier coating layers that these be laminated therein at a thickness of not less than 1 $\mu$m. When the barrier coating layer has been too thick, there has been a risk that this could constitute a source of impurities during recycling, and there has been a possibility that recycling itself might be impeded thereby. And these have also been unsuitable from the standpoint of achieving monomaterial construction through use of a single material. Moreover, with respect to processing operations during printing and so forth, there have also been issues concerning printing defects due to surface irregularities and coating nonuniformity.

To address such problems, a gas barrier laminated body in which a metal thin film comprising aluminum or the like, and/or an inorganic thin film comprising silicon oxide, aluminum oxide, or other such inorganic oxide, are formed on the surface of polyester film or other such plastic substrate film is commonly employed. Thereamong, those in which a thin film of silicon oxide, aluminum oxide, a mixture thereof, or other such inorganic oxide is formed-because they do not require use of aluminum foil, because they are transparent and allow confirmation of contents, and also because the film which is formed is extremely thin and does not interfere with recyclability-are widely used.

And with respect to polypropylene film as well, methods in which an inorganic thin film is laminated so as to permit gas barrier properties to be imparted thereto have been disclosed (e.g., Patent Reference No. 4). However, with polypropylene film, because the molecule is nonpolar, its surface energy is low, for which reason it has been pointed out that adhesiveness during inorganic thin film processing has not been adequate.

Furthermore, during formation of the inorganic thin film layer, there have also been problems in that thin film formation has not been possible, causing barrier properties to be poor, not only due to adhesive forces but also as a result of protruding portions which are produced by surface irregularities. And yet, with biaxially oriented polypropylenic film, because-due to its poor lubricity as a result of its superior flexibility and planarity-there is occurrence of blocking in which sheets of film stick to each other, antiblocking agent is commonly added so as to cause formation of surface irregularities. This being the case, there have been problems in that formation of thin films by means of vapor deposition or coating has been inadequate due to the surface irregularities that are formed, which has resulted in poor barrier properties and the like.

Various methods involving improvement of polypropylene film have been proposed as countermeasures to address such problems; for example, a method has been disclosed (see, for example, Patent Reference No. 5 and so forth) in which branched polypropylene is mixed with propylene resin, and the crystal structure of polypropylene is altered such that the $\beta$ form becomes the $\alpha$ form so as to cause formation of irregularities on the film surface for improved lubricity substantially without use of antiblocking agent involving organic or inorganic substances. However, because these employ only homopolypropylene which has high stereoregularity, the surface thereof is hard, no consideration having been given for adhesiveness when used in processing such as vapor deposition, coating, lamination, and the like.

And yet, a method has been disclosed (see, for example, Patent Reference No. 6 and so forth) in which antistatic agents are eliminated to the greatest extent possible, and, by virtue of the difference between the differing MFR of a copolymer of propylene and ethylene and/or an $\alpha$-olefin having not less than four carbons and polypropylene resin at the film surface layer, surface irregularities are formed in the resin itself to increase adhesiveness of the laminate with respect to ink and/or film(s) of other material(s). However, as the arithmetic mean roughness (SRa) of the surface layer thereof is high, there have been situations in which formation of thin films by means of vapor deposition or coating has been inadequate, which has caused worsening of barrier properties and the like. Furthermore, as there is no antiblocking agent on one of the surfaces of the film, there are situations in which there is occurrence of blocking and/or wrinkling when in a roll form.

As another method, this being one involving a technique other than improvement of substrate, it is possible to improve adhesive properties by causing an organic-solvent-type coating layer that will contribute to adhesive properties and/or barrier properties to be separately provided at the substrate surface, but this has not been adequate in terms of the adhesive force that is provided thereby. Furthermore, because it uses organic solvent this would be undesirable from the standpoint of reduction of environmental impact, and also because it would increase the number of processing operations in which coating is involved, it being desirable if it were possible to attain adhesive forces without presence of an adhesion layer that involves use of a coating.

PRIOR ART REFERENCES

PATENT REFERENCES

Patent Reference No. 1: Japanese Patent Application Publication Kokai No. 2000-52501
Patent Reference No. 2: Japanese Patent Application Publication Kokai No. H4[1992]-359033
Patent Reference No. 3: Japanese Patent Application Publication Kokai No. 2003-231221
Patent Reference No. 4: International Patent Application Publication No. 2017/221781
Patent Reference No. 5: International Patent Application Publication No. 2007/094072
Patent Reference No. 6: International Patent Application Publication No. 2018/142983

SUMMARY OF THE INVENTION

PROBLEM TO BE SOLVED BY INVENTION

At the foregoing Patent Reference Nos. 1 through 4, barrier performance and adhesive properties were inadequate. At Patent Reference Nos. 5 and 6, no investigation was made of inorganic thin film layers with respect to improvement of adhesive properties or barrier performance. Furthermore, none of the references constitutes design of a material that would satisfy the foregoing properties sought for environmentally friendly packaging materials.

The present invention was conceived with such problems of the conventional art as background.

To wit, it is an object of the present invention to provide a laminated film that is a film permitting formation of a laminate constitution constituted almost completely of a single type of resin having little environmental impact made up primarily of polypropylene film, and that has adhesive properties and gas barrier properties sought for packaging materials and moreover has properties as required to be suitable for undergoing processing and so forth.

MEANS FOR SOLVING PROBLEM

The present inventor(s) designed a prescribed polypropylene film substrate layer conforming to the required properties, and discovered that great improvement in adhesive properties and gas barrier performance could be achieved by laminating an inorganic thin film layer thereover, and moreover that a film having little environmental impact could be provided, culminating in the present invention.
That is, the present invention is constituted as follows.

1. A laminated film comprising a surface layer (B) at a surface on one side of a substrate layer (A) comprising a polypropylenic resin as primary constituent, and a surface layer (C) at a surface on the other side of the substrate layer (A), and in which an inorganic thin film layer (D) is further laminated over the surface layer (B), the laminated film being characterized in that haze of the laminated film is not greater than 5%, and in that a surface on the inorganic thin film layer (D) side of the laminated film satisfies conditions (I) through (IV), below;

(I) arithmetic mean roughness (Ra) as measured by a scanning probe microscope is not less than 4.5 nm but not greater than 9.0 nm;
(II) Martens hardness is not greater than 310 N/mm$^2$;
(III) water contact angle is not greater than 75°; and
(IV) center plane average roughness (SRa) as measured by a three-dimensional profilometer is not less than 0.010 $\mu$m but not greater than 0.040 $\mu$m.

2. The laminated film according to 1. characterized in that oxygen permeability of the laminated film in an environment that is 23° C and 65% RH is not greater than 60 cc/m$^2$·d·atm; and water vapor permeability thereof in an environment that is 40° C and 90% RH is not greater than 4 g/m$^2$·d.
3. The laminated film according to 1. or 2. characterized in that when a value of oxygen permeability of the laminated film as measured under conditions of 23° C and 65% RH is taken to be (A), and when a value of oxygen permeability thereof as measured under conditions of 23° C and 80% RH is taken to be (B), percent deterioration in barrier value under conditions of high temperature and high humidity as given by the following formula is not greater than 130%;

$$\text{Percent deterioration in barrier value at high temperature and high humidity (\%)}$$

$$= (B/A) \times 100 \qquad\qquad (\text{Formula 1}).$$

4. The laminated film according to any of 1. through 3. characterized in that center plane average roughness (SRa) as measured by a three-dimensional profilometer at a surface at the surface layer (C) side of the laminated film is not less than 0.020 $\mu$m.
5. The laminated film according to any of 1. through 4. characterized in that Martens hardness of a surface at the surface layer (C) side of the laminated film is not less than 270 N/mm$^2$.
6. The laminated film according to any of 1. through 5. wherein thickness of the laminated film is 9 $\mu$m to 200 $\mu$m.
7. Packaging material in which an olefinic sealant layer is laminated to one face of the laminated film according to any of 1. through 6..

EFFECT OF THE INVENTION

The present inventor(s) were able through such technology to provide a laminated film having adhesive properties and barrier properties sought for packaging materials as well as other such required properties while also being environmentally friendly.

BRIEF DESCRIPTION OF DRAWING

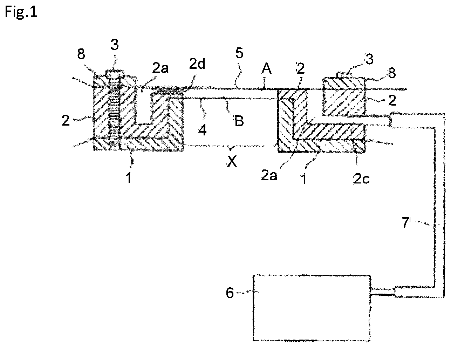

[FIG. 1] Drawing showing method for measuring air purge time in the context of the present invention.

EMBODIMENTS FOR CARRYING OUT THE INVENTION

The present invention is described in detail below.

A laminated film in accordance with the present invention comprises a surface layer (B) at a surface on one side of a substrate layer (A) comprising a polypropylenic resin as primary constituent, and a surface layer (C) at a surface on the other side of the substrate layer (A), and in which an inorganic thin film layer (D) is further laminated over the surface layer (B), the laminated film being characterized in that haze of the laminated film is not greater than 5%, and in that a surface on the inorganic thin film layer (D) side of the laminated film satisfies conditions (I) through (IV), below.

(I) Arithmetic mean roughness (Ra) as measured by a scanning probe microscope is not less than 4.5 nm but not greater than 9.0 nm.
(II) Martens hardness is not greater than 310 N/mm$^2$.
(III) Water contact angle is not greater than 75°.
(IV) Center plane average roughness (SRa) as measured by a three-dimensional profilometer is not less than 0.010 μm but not greater than 0.040 μm.

The respective layers of the laminated film are described below.

Substrate Film Layer

(1) Substrate Layer (A)

The substrate layer (A) having polypropylenic resin as primary constituent that makes up a laminated film in accordance with the present invention is preferably biaxially oriented film, and the polypropylene employed in said layer may be polypropylene that is copolymerized with not more than 0.5 mol% of ethylene and/or an α-olefin having not less than four carbons. Polypropylene in accordance with the present invention (hereinafter "polypropylene") should be understood to include such copolymerized polypropylene. It is preferred that the copolymerized component be not greater than 0.3 mol% thereof, more preferred that it be not greater than 0.1 mol% thereof, and most preferred that this be completely made up of homopolypropylene which does not contain a copolymerized component.
If this were copolymerized with more than 0.5 mol% of ethylene and/or an α-olefin having not less than four carbons, there would be situations in which crystallinity and/or rigidity would decrease to an excessive degree, increasing thermal shrinkage at high temperatures. Such a resin might be used in blended form.
It is preferred that the meso pentad fraction ([mmmm]%) as measured by 13C-NMR which is an index of the stereoregularity of the polypropylene that makes up substrate layer (A) of a polypropylenic laminated film in accordance with the present invention be 98% to 99.5%. Not less than 98.1% is more preferred, and not less than 98.2% is even more preferred. If the meso pentad percentage of the polypropylene is too low, there is a possibility that this will lower the modulus of elasticity and cause heat resistance to be inadequate. 99.5% is a practical upper limit.
It is preferred that the mass-average molecular weight (Mw) of the polypropylene that makes up substrate layer (A) of a polypropylenic laminated film in accordance with the present invention be 180,000 to 500,000.
If this were less than 180,000, because melt viscosity would be low, it would lack stability during casting, and there would be situations in which there would be worsening of film formability. If Mw were to exceed 500,000, the amount of the component for which molecular weight is not greater than 100,000 would reach 35 mass%, causing worsening of thermal shrinkage at high temperatures.
It is preferred that the lower limit of the range in values for Mw be 190,000, and more preferred that this be 200,000; it is preferred that the upper limit of the range in values for Mw be 320,000, more preferred that this be 300,000, and particularly preferred that this be 250,000.
It is preferred that the number-average molecular weight (Mn) of the polypropylene that makes up substrate layer (A) of a polypropylenic laminated film in accordance with the present invention be 20,000 to 200,000.
If this were less than 20,000, because melt viscosity would be low, it would lack stability during casting, and there would be situations in which there would be worsening of film formability. Above 200,000, there would be worsening of thermal shrinkage at high temperatures.
It is preferred that the lower limit of the range in values for Mn be 30,000, more preferred that this be 40,000, and particularly preferred that this be 50,000; it is preferred that the upper limit of the range in values for Mn be 80,000, more preferred that this be 70,000, and particularly preferred that this be 60,000.
Furthermore, it is preferred that Mw/Mn which is an index of molecular weight distribution be 2.8 to 10 for the polypropylene that makes up substrate layer (A). It is more preferred that this be 2.8 to 8, still more preferred that this be 2.8 to 6, and particularly preferred that this be 2.8 to 5.4. Furthermore, it is preferred that the lower limit of the range in values therefor be not less than 3, and more preferred that this be not less than 3.3.
Note that the molecular weight distribution of polypropylene might be adjusted by causing components of differing molecular weights to be polymerized in multistage fashion at a series of production facilities, by causing components of differing molecular weights to be blended in kneader(s) in offline fashion, by causing polymerization with blending of catalysts having differing properties, by using catalyst(s) permitting attainment of desired molecular weight distribution(s), and so forth.

It is preferred that the polypropylene that makes up substrate layer (A) of a polypropylenic laminated film in accordance with the present invention be such that the melt flow rate (MFR; 230° C, 2.16 kgf) thereof is 2 g/10 min to 20 g/10 min when Mw/Mn is in the range 2.8 to 5.4.

It is more preferred that the lower limit of the range in values for the MFR of the polypropylene at substrate layer (A) be 3 g/10 min, still more preferred that this be 4 g/10 min, and particularly preferred that this be 5 g/10 min. It is more preferred that the upper limit of the range in values for the MFR of the polypropylene that makes up substrate layer (A) be 15 g/10 min, and still more preferred that this be 12 g/10 min.

When the Mw/Mn and MFR of the polypropylene that makes up substrate layer (A) are within these ranges, this will make it possible to maintain low thermal shrinkage at high temperatures, and as adhesion with respect to cooling roller(s) will also be satisfactory, film formability will be excellent.

(2) Surface Layer (B)

It is preferred that the arithmetic mean roughness (Ra) as determined by a scanning probe microscope (AFM) of the surface layer (B) side surface of a polypropylenic laminated film in accordance with the present invention be not less than 3.0 nm but not greater than 5.5 nm. Said arithmetic mean roughness (Ra) is the value as determined in accordance with the definition of arithmetic mean roughness described at JIS-B0601 (1994) following correction (tilt, line fitting, noise line elimination) of the image obtained by using a scanning probe microscope (AFM) to carry out measurement within an area in which measurement is performed over a length that is 2 $\mu$m in each the X and Y directions while in dynamic mode.

Arithmetic mean roughness Ra by the AFM within an area that is 2 $\mu$m on a side, which is related to the adhesiveness with respect to the inorganic thin film layer, is an index that is indicative of surface irregularity in the resin itself as distinct from portions corresponding to the comparatively large peaks and valleys that are formed by antiblocking agent or lubricant. When arithmetic mean roughness (Ra) is below 3.0 nm, this will cause occurrence of problems in that the surface area of surface layer (B) will be small, and there will be a decrease in adhesive force. If arithmetic mean roughness (Ra) exceeds 5.5 nm, this will cause increase in the extent of surface irregularities and cause occurrence of voids during inorganic thin film formation, resulting in poor barrier properties and so forth. It is more preferred that arithmetic mean roughness (Ra) of the surface layer (B) side surface be not less than 3.2 nm, still more preferred that this be not less than 3.3 nm, particularly preferred that this be not less than 3.5 nm, and most preferred that this be not less than 4.0 nm.

To cause arithmetic mean roughness (Ra) of the surface layer (B) side surface to be not less than 3.0 nm but not greater than 5.5 nm, it is preferred that a mixture of two or more polypropylenic resins of differing melt flow rate (MFR) be used as a polypropylenic resin composition for forming surface layer (B). It is preferred that the difference in MFRs in such case be not less than 3 g/10 min, and more preferred that this be not less than 3.5 g/10 min.

Where the difference between/among melt flow rates (MFRs) of two or more polypropylenic resins in the polypropylenic resin mixture is such that these differ as described above, because the crystallinities and crystallization rates of the respective polypropylenes will differ, it is speculated that this will cause increase in the tendency for formation of surface irregularities to occur. But note that caution should be exercised, since when crystallinity of polypropylene is high or the cooling rate of the unstretched sheet during film manufacture is low, there may be increase in the extent of surface irregularities due to spherulites, or it may be that whitening and increase in the extent of surface irregularities due to employment of stretching temperature that is too high during machine direction stretching or transverse direction stretching will cause arithmetic mean roughness (Ra) to exceed 5.5.

As polypropylenic resin(s) of lower MFR, polypropylene that has been copolymerized with ethylene and/or an $\alpha$-olefin having not less than four carbons may be employed. As $\alpha$-olefins having not less than four carbons, 1-butene, 1-hexene, 4-methyl-1-pentene, 1-octene, and so forth may be cited as examples. Furthermore, as other copolymerized components, those which like maleic acid have polarity may be employed.

It is preferred that the total of all ethylene and/or $\alpha$-olefin(s) having not less than four carbons and any other copolymerized component(s) be not greater than 8.0 mol%. If more than 8.0 mol% is copolymerized therein, there may be situations in which whitening of the film occurs and external appearance becomes poor, or in which film formation becomes difficult due to occurrence of tackiness.

Furthermore, two or more of such resins may be blended together before use. Where blending is carried out, while more than 8.0 mol% of each of the resins may be copolymerized therein, it is preferred that the blended mixture be such that, in terms of monomer units, monomers other than propylene are not greater than 8.0 mol%.

Furthermore, as polypropylenic resin(s) of higher MFR, the foregoing copolymerized polypropylene(s) might be employed, or homopolypropylene resin might be used.

It is preferred that the polypropylene resin composition that makes up surface layer (B) at a polypropylenic laminated film in accordance with the present invention be such that the MFR thereof is 1.0 g/10 min to 10.0 g/10 min. It is more preferred that the lower limit of the range in values for the MFR of the polypropylene resin composition that makes up surface layer (B) be 2.0 g/10 min, still more preferred that this be 3.0 g/10 min, and particularly preferred that this be 4.0 g/10 min. It is more preferred that the upper limit of the range in values for the MFR of the polypropylene resin composition that makes up surface layer (B) be 9.0 g/10 min, still more preferred that this be 8.0 g/10 min, and particularly preferred that this be 5.5 g/10 min. Within such range(s), film formability will be satisfactory, and external appearance will be excellent. If the MFR of the polypropylene resin composition that makes up surface layer (B) were less than 1.0 g/10 min, then because when the MFR of the polypropylene that makes up substrate layer (A) is high this would cause there to be a large difference between the viscosities of the substrate layer (A) and surface layer (B), this would tend to increase occurrence of nonuniformity (stock material nonuniformity) during film formation. If the MFR of the polypropylene resin composition that makes up surface layer (B) were to exceed 10 g/10 min, there would be a possibility that this would cause adhesion with respect to cooling roller(s) to worsen, air to become entrained therebetween, and smoothness to worsen, as well as cause increase in defects resulting therefrom.

Furthermore, regardless of whether an inorganic thin film (D) is present, it is preferred that the center plane average roughness (SRa) as determined by a three-dimensional profilometer of the surface at surface layer (B) of the polypropylenic laminated film be not less than 0.010 μm but not greater than 0.040 μm. Center plane average roughness SRa is the value as determined in accordance with the definition of arithmetic mean roughness described at JIS-B0601 (1994) by using a three-dimensional profilometer to carry out measurement with a stylus pressure of 20 mg, a measurement length of 1 mm in the X direction, 99 recorded lines at a feed pitch of 2 μm in the Y direction, a magnification of 20000x in the height direction, and a cutoff of 80 μm. It is more preferred that the center plane average roughness (SRa) of the surface at surface layer (B) be not less than 0.012 μm but not greater than 0.038 μm, still more preferred that this be not less than 0.015 μm but not greater than 0.036 μm, and particularly preferred that this be not less than 0.020 μm but not greater than 0.034 μm. Regardless of whether an inorganic thin film (D) is present, if the center plane average roughness (SRa) of the surface at surface layer (B) is less than 0.010 μm, this will cause the extent of surface irregularities to be small, and will cause worsening of film lubricity, time to purge air between sheets of film, and resistance to blocking. If the center plane average roughness (SRa) of the surface at surface layer (B) were to exceed 0.040 μm, then there would be situations in which when an inorganic thin film layer (D) is laminated therewith there would be occurrence of through-holes in the thin film layer due to antiblocking agent and/or locations at which thin film does not form at side faces of projecting regions, and there would be worsening of barrier properties and/or occurrence of poor adhesion. While there are a number of methods by which the center plane average roughness (SRa) of the surface at surface layer (B) may be constrained within a range, it is possible for this to be adjusted by means of the amount added, and/or average particle diameter, of antiblocking agent.

As antiblocking agent, it is possible to use any chosen as appropriate from among silica, calcium carbonate, kaolin, zeolite, and other such inorganic-type particles, and acrylic, polymethacrylic, polystyrenic, and other such organic-type particles. Thereamong, use of silica and/or polymethacrylic particles is particularly preferred. It is preferred that average particle diameter of antiblocking agent be 1.0 μm to 3.0 μm, and more preferred that this be 1.0 μm to 2.7 μm. A method for measuring what is referred to here as average particle diameter is such that a scanning electron microscope is used to take a photograph, and an image analyzer apparatus is used to measure the Feret diameter in the horizontal direction, the average value for which that is displayed being used therefor.

Regarding the amount of antiblocking agent that is added, so long as the amounts added to surface layer (B) and surface layer (C) are adjusted so as to cause haze, coefficient of dynamic friction, center plane average roughness (SRa), and air purge time to be within prescribed ranges, there is no particular limitation with respect thereto.

It is preferred that wetting tension of the surface at surface layer (B) of the polypropylenic laminated film in accordance with the present invention be not less than 38 mN/m. Wetting tension, which is related to how easily wetting by printing ink or adhesive will occur, indicates the numeric value of the surface tension (mN/m) of the test mixture for which it is judged that wetting of the film surface occurs. When wetting tension is not less than 38 mN/m, this will improve adhesion with respect to adhesive used when carrying out lamination with vapor-deposited films, coated films, or films of other components. To cause wetting tension to be not less than 38 mN/m, while antistatic agent, surface active agent, and/or other such additive(s) may ordinarily be employed, because such methods will have the effect of lowering surface resistance, it is preferred that corona treatment, flame treatment, and/or other such physicochemical surface treatment be carried out.

For example, for corona treatment, it is preferred that preheating roller(s) and treatment roller(s) are used, and that electrical discharge be carried out in air.

Regardless of whether an inorganic thin film (D) is present, it is preferred that the Martens hardness of surface layer (B) at a polypropylenic laminated film in accordance with the present invention be not greater than 310 N/mm$^2$. Martens hardness indicates the hardness of a resin when a dynamic ultramicrohardness tester is used and the surface is depressed by on the order of 0.1 μm by the tip of a stylus having a radius of curvature that is not greater than 0.1 μm. Not greater than 305 N/mm$^2$ is preferred, and not greater than 300 N/mm$^2$ is more preferred.

When Martens hardness exceeds 310 N/mm$^2$, the surface will be hard, there will be worsened ability to conform to the resin surface during processing, and there will be decrease in adhesion. A Martens hardness of not greater than 310 N/mm$^2$ might be achieved by adding ethylene and/or α-olefin(s) having not less than four carbons and/or other copolymerized component(s). Furthermore, it is also possible to lower Martens hardness by reducing the stretching ratio of the film and reducing molecular chain orientation. But note that caution should be exercised, since the film might become brittle and hard as a result of radiated heat during formation of the inorganic thin film layer, or it might become hard as a result of bleeding out of components originating from the substrate.

It is preferred that the Martens hardness of surface layer (B) of a polypropylenic laminated film in accordance with the present invention be not less than 200 N/mm$^2$, and more preferred that this be not less than 210 N/mm$^2$.

(3) Surface Layer (C)

It is preferred that the center plane average roughness (SRa) as determined by a three-dimensional profilometer of the surface at surface layer (C) of a polypropylenic laminated film in accordance with the present invention be not less than 0.020 μm. It is more preferred that the center plane average roughness (SRa) of the surface at surface layer (C) be not less than 0.022 μm, still more preferred that this be not less than 0.025 μm, and particularly preferred that this be not less than 0.028 μm. If the center plane average roughness (SRa) of the surface at surface layer (C) is less than 0.020 μm, this will cause the extent of surface irregularities to be small, and will cause worsening of film lubricity, time to purge air between sheets of film, and resistance to blocking. While there are a number of methods by which the center plane average roughness (SRa) of the surface at surface layer (C) may be constrained within a range, it is possible for this to be adjusted by means of the amount added, and/or average particle diameter, of antiblocking agent.

It is preferred that the center plane average roughness (SRa) as determined by a three-dimensional profilometer of the surface at surface layer (C) of a polypropylenic laminated film in accordance with the present invention be not greater than 0.040 μm.

Furthermore, it is preferred that the Martens hardness of surface layer (C) of the polypropylenic laminated film be not less than 270 N/mm$^2$. It is preferred that this be not less than 275 N/mm$^2$, still more preferred that this be not less than 280 N/mm$^2$, and particularly preferred that this be not less than 285 N/mm$^2$.

When Martens hardness is less than 270 N/mm$^2$, the surface will be soft, the antiblocking agent that is added will remain undispersed at the interior of the resin, and there will be worsening of lubricity and resistance to blocking. A Martens hardness of not less than 270 N/mm$^2$ might preferably be achieved by employing polypropylene that has been copolymerized with not greater than 0.5 mol% of ethylene and/or an α-olefin having not less than four carbons, not greater than 0.1 mol% being more preferred, and it being most preferred that this be completely made up of homopolypropylene which does not contain a copolymerized component. Furthermore, it is also possible to increase Martens hardness by causing the meso pentad percentage ([mmmm]%) of the polypropylene of which it made up to be not less than 98% and increasing crystallinity.

It is preferred that the Martens hardness of surface layer (C) of the polypropylenic laminated film be not greater than 350 N/mm$^2$.

Polypropylene resin employed in the present invention may be obtained by using a Ziegler-Natta catalyst, metallocene catalyst, or other such publicly known catalyst to polymerize propylene raw material. Thereamong, to eliminate bonding with dissimilar species, use of a Ziegler-Natta catalyst, or use of a catalyst permitting polymerization with high stereoregularity, is preferred.

As method for polymerizing the propylene raw material, publicly known methods may be employed; for example, methods in which polymerization is carried out in hexane, heptane, toluene, xylene, or another such inert solvent; methods in which polymerization is carried out in liquid monomers; methods in which catalysts are added to gas monomers and polymerization is carried out while in a gaseous state; methods in which polymerization is carried out through combination of the foregoing; and so forth may be cited.

Substrate layer (A) and/or surface layer (B) and/or surface layer (C) of a polypropylenic laminated film in accordance with the present invention in accordance with the present invention may be made to contain additive(s) and/or other resin(s). As additives, antioxidants, ultraviolet light absorbers, nucleating agents, adhesives, antifogging agents, flame retardants, organic and inorganic fillers, and so forth may be cited as examples. As other resins, polypropylene resins other than the polypropylene resin(s) employed in accordance with the present invention, random copolymers which are copolymers of propylene and ethylene and/or an α-olefin having not less than four carbons, any of various elastomers, and so forth may be cited. These may be sequentially polymerized through use of a multistage reaction vessel, or blended in a Henschel Mixer with polypropylene resin, or master pellets manufactured in advance using a melt kneader might be diluted with polypropylene so as to achieve a prescribed concentration, or melt kneading of the total amount might be carried out in advance before being used. Moreover, so long as it does not impair the object of the present invention, corona discharge treatment, glow discharge treatment, flame treatment, and/or surface roughening treatment may be carried out; and furthermore, publicly known anchor coat treatment, printing, ornamentation, and/or the like may be carried out.

(3) Polypropylenic Laminated film

A polypropylenic laminated film in accordance with the present invention is preferably biaxially oriented film, and while it is a three-layer structure, i.e., surface layer (B)/substrate layer (A)/surface layer (C); it may be a two-layer structure, i.e., surface layer (B)/substrate layer (A); a four-layer structure, i.e., surface layer (B)/substrate layer (A)/intermediate layer (D)/surface layer (C); or a multilayer structure in which there are more layers than these.

Where there are a plurality of substrate layers (A), surface layers (B), and/or surface layers (C), note that the compositions of the respective layers may differ so long as they satisfy the properties thereof.

It is preferred that overall thickness of a polypropylenic laminated film in accordance with the present invention be not less than 9 μm but not greater than 200 m, more preferred that this be not less than 10 μm but not greater than 150 μm, still more preferred that this be not less than 12 μm but not greater than 100 μm, and particularly preferred that this be not less than 15 μm but not greater than 80 μm.

As the ratio between the thickness of surface layer (B) and the thickness of substrate layer (A) in a polypropylenic laminated film in accordance with the present invention, it is preferred that this ratio, i.e., combined thickness of all surface layers (B)/combined thickness of all substrate layers (A) be not less than 0.01 but not greater than 0.50, more preferred that this be not less than 0.02 but not greater than 0.40, still more preferred that this be 0.03 to 0.30, and particularly preferred that this be not less than 0.04 but not greater than 0.20. When combined thickness of all surface layers (B)/combined thickness of all substrate layers (A) exceeds 0.50, there will be a tendency for thermal shrinkage to increase.

As the ratio between the thickness of surface layer (C) and the thickness of substrate layer (A) in the polypropylenic laminated film, it is preferred that this ratio, i.e., combined thickness of all surface layers (C)/combined thickness of all substrate layers (A) be not less than 0.01 but not greater than 0.50, more preferred that this be not less than 0.02 but not greater than 0.40, still more preferred that this be not less than 0.03 but not greater than 0.30, and particularly preferred that this be not less than 0.04 but not greater than 0.20. When combined thickness of all surface layers (C)/combined thickness of all substrate layers (A) exceeds 0.50, there may, depending on the amount of antiblocking agent that is added thereto, be increase in haze and worsening of transparency.

Furthermore, it is preferred that combined thickness of all substrate layers (A) as a fraction of total thickness of the film be not less than 50% but not greater than 99%, still more preferred that this be not less than 60 but not greater than 97%, particularly preferred that this be not less than 70% but not greater than 95%, and most preferred that this be not less than 80% but not greater than 92%.

Regardless of whether an inorganic thin film (D) is present, it is preferred that haze of a polypropylenic laminated film in accordance with the present invention be not greater than 5%, more preferred that this be not less than 0.2 but not greater than 5.0%, still more preferred that this be not less than 0.3 but not greater than 4.5%, and particularly preferred that this be not less than 0.4 but not greater than 4.0%. When this is within the foregoing range(s), it may be more easily used in applications where transparency is demanded. There being a tendency for haze to worsen when, for example, stretching temperature or heat setting temperature is too high, when cooling roller temperature is high and cooling rate of the unstretched (stock material) sheet is low, or when the amount of the low-molecular-weight component is too high, it will be possible through adjustment of these to cause this to be within the foregoing ranges. A method for measuring haze will be described below.

It is preferred that the tensile modulus of elasticity in the machine direction (MD direction) of a polypropylenic laminated film in accordance with the present invention be not less than 1.8 GPa but not greater than 4.0 GPa, more preferred that this be not less than 2.0 GPa but not greater than 3.7 GPa, still more preferred that this be not less than 2.1 GPa but not greater than 3.5 GPa, and particularly preferred that this be not less than 2.2 GPa but not greater than 3.4 GPa. It is preferred that the tensile modulus of elasticity in the transverse direction (TD direction) be not less than 3.8 GPa but not greater than 8.0 GPa, more preferred that this be not less than 4.0 GPa but not greater than 7.5 GPa, still more preferred that this be not less than 4.1 GPa but not greater than 7.0 GPa, and particularly preferred that this be not less than 4.2 GPa but not greater than 6.5 GPa. When the tensile moduli of elasticity are within the foregoing ranges, because it will be resilient, permitting use even when film thickness is low, this will make it possible to reduce the amount of film that is used. A method for measuring tensile modulus of elasticity will be described below.

It is preferred that thermal shrinkage in the machine direction at 150° C of a polypropylenic laminated film in accordance with the present invention be not less than 0.2% but not greater than 15.0 %, more preferred that this be not less than 0.3% but not greater than 13.0%, still more preferred that this be not less than 0.5% but not greater than 11.0%, and particularly preferred that this be not less than 0.5% but not greater than 9.0%. When thermal shrinkage is within the foregoing ranges, it will be possible to attain a film having excellent heat resistance, use of which even in applications in which there is a possibility of exposure to high temperatures being permitted as a result thereof. Note that while it is possible to cause thermal shrinkage at 150° C to be to on the order of 1.5% by, for example, increasing the amount of the low-molecular-weight component or adjusting stretching conditions or heat setting conditions, to reduce this to a value which is lower than this it is preferred that annealing treatment or the like be carried out in offline fashion.

It is preferred that thermal shrinkage in the transverse direction at 150° C of a polypropylenic laminated film in accordance with the present invention be not less than 0.5% but not greater than 30.0 %, more preferred that this be not less than 0.5% but not greater than 25.0%, still more preferred that this be not less than 0.5% but not greater than 20.0%, and particularly preferred that this be not less than 0.5% but not greater than 18.0%. When thermal shrinkage is in the foregoing ranges, it will be possible to attain a film having excellent heat resistance, use of which even in applications in which there is a possibility of exposure to high temperatures being permitted as a result thereof. Note that while it is possible to cause thermal shrinkage at 150° C to be to on the order of 1.5% by, for example, increasing the amount of the low-molecular-weight component or adjusting stretching conditions or heat setting conditions, to reduce this to a value which is lower than this it is preferred that annealing treatment or the like be carried out in offline fashion.

It is preferred that the coefficients of dynamic friction at surface layer (B) and surface layer (C) of a polypropylenic laminated film in accordance with the present invention be not greater than 0.60, more preferred that these be not greater than 0.55, and particularly preferred that these be not greater than 0.50. When the coefficients of dynamic friction are not greater than 0.60, this will make it possible for unwinding of film from the film roll to take place smoothly and will facilitate printing treatment.

It is preferred that the time to purge air between surface layer (B) and surface layer (C) of a polypropylenic laminated film in accordance with the present invention be not greater than 10 seconds, more preferred that this be not greater than 8 seconds, and still more preferred that this be not greater than 5 seconds. When the time to purge air therebetween exceeds 10 seconds, the time it takes for air to be purged therefrom when the film is rolled up into a rolled state will be long, and there will be a tendency for wrinkles to form.

(4) Manufacturing Method

A polypropylenic laminated film in accordance with the present invention is preferably biaxially oriented film, and may be obtained by causing a polypropylenic resin composition that will make up substrate layer (A), a polypropylenic resin composition that will make up surface layer (B), and a polypropylenic resin composition that will make up surface layer (C) to be melt extruded by separate extruders, coextruding these at dies, cooling this at a cooling roller(s) to form an unstretched sheet, causing this sheet to be stretched in the machine direction (MD) and transverse direction (TD), and thereafter carrying out heat setting treatment. Note that it is preferred that extrusion be carried out in such fashion as to cause surface layer (B) to come in contact with the cooling roller(s). If surface layer (B) is at the side opposite the surface that comes in contact with the cooling roller(s), there are situations in which this might cause the polypropylene resin to anneal and crystallinity to increase, and arithmetic mean roughness (Ra) of the surface at surface layer (B) to become too large as a result of surface irregularities due to spherulites.

It is preferred that melt extrusion temperature be on the order of 200° to 280° C, it being preferred so as to permit a laminated film of satisfactory external appearance without disruption of layers to be obtained within such a temperature range that the difference in viscosities (difference in MFRs) between the polypropylene raw material for substrate layer (A) and the polypropylene raw material for surface layer (B) be not greater than 6.0 g/10 min. When the difference in viscosities is greater than 6 g/10 min, there will be disruption of layers and external appearance will tend to be unsatisfactory. A difference in viscosities that is not greater than 5.5 g/10 min is more preferred, and not greater than 5.0 g/10 min is even more preferred.

It is preferred that cooling roller surface temperature be 25° to 35° C, and more preferred that this be 27° to 33° C. If cooling roller temperature exceeds 35° C, there are situations in which this might cause crystallinity of the polypropylene resin to increase, and arithmetic mean roughness (Ra) of the surface at surface layer (B) to become too large as a result of surface irregularities due to the spherulites that will form.

It is preferred that the lower limit of the range in values for the stretching ratio in the machine direction (MD) be 3x, and more preferred that this be 3.5x. Where less than the foregoing, there are situations in which this may cause occurrence of film thickness nonuniformity. It is preferred that the upper limit of the range in values for the MD stretching ratio be 8x, and more preferred that this be 7x. Where more than the foregoing, there are situations in which there may be difficulty in carrying out the TD stretching that follows. It is preferred that the lower limit of the range in values for the MD stretching temperature be 120° C, more preferred that this be 125° C, and still more preferred that this be 130° C. Where less than the foregoing, there are situations in which this may cause increase in mechanical load, increase in thickness nonuniformity, and/or occurrence of film surface roughening. It is preferred that the upper limit of the range in values for the MD stretching temperature be 160° C, more preferred that this be 155° C, and still more preferred that this be 150° C. While higher temperatures are preferred for decreasing thermal shrinkage, there are situations in which the clinging to the roll that may result will interfere with ability to carry out stretching and/or cause occurrence of surface roughening.

It is preferred that the lower limit of the range in values for the stretching ratio in the transverse direction (TD) be 4x, more preferred that this be 5x, and still more preferred that this be 6x. Where less than the foregoing, there are situations in which this may cause occurrence of thickness nonuniformity. It is preferred that the upper limit of the range in values for the TD stretching ratio be 20x, more preferred that this be 17x, still more preferred that this be 15x, and particularly preferred that this be 12x. Where more than the foregoing, there are situations in which thermal shrinkage may increase and/or fracture may occur during stretching. To rapidly raise the film temperature to a temperature in the vicinity of the stretching temperature, the preheating temperature for TD stretching is preferably set to 5° to 15° C above the stretching temperature. It is preferred that the lower limit of the range in values for the TD stretching temperature be 150° C, more preferred that this be 155° C, still more preferred that this be 158° C, and particularly preferred that this be 160° C. Where less than the foregoing, there are situations in which softening is inadequate and fracture occurs, and/or in which thermal shrinkage increases. It is preferred that the upper limit of the range in values for TD stretching temperature be 170° C, more preferred that this be 168° C, and still more preferred that this be 165° C. While higher temperatures are preferred for decreasing thermal shrinkage, where more than the foregoing, not only are there situations in which the low-molecular-weight component melts and orientation decreases following recrystallization, but there are also situations in which there is occurrence of surface roughening and/or whitening of the film.

Following stretching, the film is made to undergo heat setting. It is preferred that the lower limit of the range in values for the heat setting temperature be 163° C, and more preferred that this be 165° C. Where less than the foregoing, there are situations in which this may cause increase in thermal shrinkage. Furthermore, while long treatment times are necessary for decreasing thermal shrinkage, there are situations in which this may result in inferior productivity. It is preferred that the upper limit of the range in values for the heat setting temperature be 176° C, and more preferred that this be 175° C. Where more than the foregoing, there are situations in which the low-molecular-weight component may melt and recrystallize, and/or there is occurrence of surface roughening and/or whitening of the film.

It is preferred that relaxation be carried out at the time of heat setting. It is preferred that the lower limit of the range in values for the percent relaxation be 2%, and more preferred that this be 3%. Where less than the foregoing, there are situations in which this may cause increase in thermal shrinkage. It is preferred that the upper limit of the range in values for the percent relaxation be 10%, and more preferred that this be 8%. Where more than the foregoing, there are situations in which this may cause increase in thickness nonuniformity.

Moreover, to reduce thermal shrinkage, the film that is manufactured as a result of the foregoing operations might first be rolled up into a rolled state and this might thereafter be subjected to annealing in offline fashion.

The biaxially oriented polypropylenic laminated film obtained in this manner may, where necessary, be made to undergo corona discharge, plasma treatment, flame treatment, and/or the like, following which it may be rolled up using a winder to obtain a biaxially oriented polypropylene film roll in accordance with the present invention.

Inorganic Thin Film Layer

A gas barrier laminated film in accordance with the present invention comprises an inorganic thin film layer at a surface of the substrate film layer. The inorganic thin film layer is a thin film comprising metal and/or inorganic oxide. While there is no particular limitation with respect to the material(s) that form the inorganic thin film layer so long as they are capable of being made into a thin film, from the standpoint of gas barrier properties, silicon oxide (silica), aluminum oxide (alumina), mixtures of silicon oxide and aluminum oxide, and other such inorganic oxides may be preferably cited. At such composite oxides, it is preferred that the ratio in which silicon oxide and aluminum oxide are mixed be such that Al, when expressed in terms of percent by mass of metal content, is within a range that is 20 mass% to 70 mass%. When Al concentration is less than 20 mass%, there are situations in which water vapor barrier properties may worsen. On the other hand, above 70 mass%, there is a tendency for the inorganic thin film layer to become hard, and there is a possibility that the film could fail during secondary processing such as printing or lamination, causing gas barrier properties to worsen. Furthermore, when Al concentration is 100 mass%, although water vapor barrier performance would be satisfactory, the fact that there would be only a single material would tend to cause the surface to become flat, impairing lubricity and increasing the tendency for occurrence of problems (wrinkling, pock marks, etc.) during processing. Note that what is referred to here as silicon oxide includes $SiO$, $SiO_2$, and the various other oxides of silicon as well as mixtures thereof, and what is referred to here as aluminum oxide includes $Al$, $Al_2O_3$, and the various other oxides of aluminum as well as mixtures thereof.

Film thickness of the inorganic thin film layer is ordinarily 1 nm to 100 nm, and is preferably 5 nm to 50 nm. When film thickness of the inorganic thin film layer is below 1 nm, there are situations in which it will be difficult to obtain satisfactory gas barrier properties; on the other hand, even if this were made to be of excessive thickness above 100 nm, as there would be no corresponding effect in terms of improvement of gas barrier properties, this would on the contrary be disadvantageous with regard to bending resistance and manufacturing cost.

There is no particular limitation with respect the method for forming the inorganic thin film layer; for example, vacuum deposition methods, sputtering methods, ion plating methods, and other such physical vapor deposition methods (PVD methods), chemical vapor deposition methods (CVD methods), and/or other such publicly known vapor deposition method(s) may be employed as appropriate. A typical method for forming an inorganic thin film layer will be described below using the example of a thin film of the silicon oxide/aluminum oxide type. For example, where the vacuum deposition method is employed, a mixture of $SiO_2$ and $Al_2O_3$, a mixture of $SiO_2$ and Al, or the like, might preferably be used as vapor deposition raw material. Whereas particles are ordinarily used as such vapor deposition raw material, it is desirable where this is the case that sizes of respective particles be on the order of that which will not alter the pressure at the time vapor deposition, a preferred particle diameter being 1 mm to 5 mm. To carry out heating, resistive heating, high-frequency inductive heating, electron beam heating, laser heating, and/or other such techniques may be used. Furthermore, reactive deposition may be employed in which reactant gas(es) in the form of oxygen, nitrogen, hydrogen, argon, carbon dioxide gas, water vapor, and/or the like are introduced, and/or in which ozone addition is carried out, this is ion assisted, and/or other such means are employed. Moreover, electrical bias(es) may be applied to the deposition target (the laminated film undergoing vapor deposition), heating and/or cooling of the deposition target may be carried out, and any of various other film formation conditions may be varied as desired. Such vapor deposition raw material(s), reactant gas(es), electrical bias(es) applied to the deposition target, heating/cooling, and so forth may likewise be varied when the sputtering method or CVD method is employed.

It is necessary that the laminated film of the present invention be such that the contact angle of water with respect to the surface of inorganic thin film layer (D) is not greater than 75°. It is preferred that this be not less than 10° but not greater than 70°, more preferred that this be not less than 15° but not greater than 65°, and still more preferred that this be not less than 20° but not greater than 60°. The water contact angle is an index of the quality of the film at the inorganic thin film layer. Causing the water contact angle to be within the foregoing ranges will make it possible for this to possess water-resistant adhesive properties and/or satisfactory barrier properties. When the water contact angle is less than 10°, there is a possibility that its water vapor barrier properties will worsen due to the hydrophilicity of the film. Moreover, the fact that the surface is hydrophilic will cause there to be poor adhesion with the substrate, which will increase the tendency for water to infiltrate the space between layers and create a tendency for water-resistant adhesive properties to worsen. On the other hand, when the water contact angle is greater than 75°, as it can hardly be said that the inorganic thin film will form in uniform fashion, there will be worsening of barrier performance.

The value of the contact angle of water with respect to the surface of inorganic thin film layer (D) will vary depending on the material(s) used at the inorganic thin film layer. Regarding material(s), it is preferred that the concentration of aluminum and/or aluminum oxide within inorganic thin film layer (D) be not less than 30 mass%. Not less than 35 mass% is more preferred, and not less than 40 mass% is even more preferred. When aluminum oxide concentration is below 30 mass%, the film will be hydrophilic and the aforementioned water contact angle will be at or below the lower limit of the range in values therefor.

The present inventor(s) discovered that the value of the contact angle of water with respect to the surface of inorganic thin film layer (D) will also vary depending on the surface resistance (the extent to which any antistatic agent bleeds out) at the substrate. Antistatic agents possess hydrophilic groups and/or other such hydrophilic sites for manifesting their antistatic effect, and, whereas it had been expected that the value of the contact angle of water with respect to the surface of inorganic thin film layer (D) in a situation where antistatic agent had leached out (bled out) at surface layer (B) would be less than when no antistatic agent was present, it was learned to the contrary that bleedout of antistatic agent causes the value of the contact angle of water with respect to the surface of inorganic thin film layer (D) to increase. It is preferred that the value of surface resistance at the surface of surface layer (B) of a substrate film in accordance with the present invention be not less than 14 Log Ω. When surface resistance is not less than 14 Log S2, because there will be little bleedout of antistatic agent such as might otherwise interfere with lamination of inorganic thin film layer (D), this will make it possible for lamination to be carried out uniformly, improving barrier properties. At such time, the contact angle of water with respect to inorganic thin film layer (D) will be within prescribed range(s). It is more preferred that the surface resistance value be not less than 15 Log Ω, and particularly preferred that this be not less than 16 Log Ω. When the surface resistance value is below 14 Log S2, antistatic agent that has bled out at surface layer (B) will interfere with lamination of inorganic thin film layer (D) and cause production of a nonuniform film. In such case, there is a possibility as a result of the influence of the underlying substrate surface which acts thereon that the water contact angle will be at or above the upper limit of the range in values therefor. As a way to cause the surface resistance value to be not less than 14 Log S2, refraining as much as possible from use of antistatic agents, antifogging agents, and other additives may be cited. Furthermore, caution should be exercised, since there are situations in which additive(s) contained within substrate layer (A) bleed out onto the surface of surface layer (B).

Moreover, the value of the contact angle of water with respect to the surface of inorganic thin film layer (D) will also be influenced by fine surface irregularities. It is possible to carry out fine adjustment of the value of the contact angle by controlling the arithmetic mean roughness (Ra) as determined by a scanning probe microscope (AFM) on the side of the laminated film which is toward inorganic thin film layer (D), described below, so as to be within prescribed range(s).

It is preferred that a laminated film in accordance with the present invention be such that the arithmetic mean roughness (Ra) as determined by a scanning probe microscope (AFM) of the inorganic thin film layer layer (D) side surface thereof be not less than 4.5 nm but not greater than 9.0 nm. The present inventor(s) discovered that while the trend in this arithmetic mean roughness Ra was almost identical to the trend in roughness at surface layer (B) of the aforementioned substrate film, there was a further change in roughness following formation of the inorganic thin film layer. While the reason for this is unclear, it is thought that application of heat to the film during the inorganic thin film lamination operation causes occurrence of a change in the surface irregularity of the substrate resin, and moreover that the state of surface irregularity is affected as a result of bleedout of low-molecular-weight component, antistatic agent, and/or other such additive substance(s) from the substrate. If the arithmetic mean roughness (Ra) is within the foregoing range(s), not only will this improve adhesion between the inorganic thin film layer and the substrate, but the increased extent of the surface irregularities which are formed will also make it possible for adhesion to be maintained when protective layer(s), adhesive(s), printing layers, and/or the like are further laminated therewith. When the foregoing arithmetic mean roughness (Ra) is below 4.5 nm, this will cause occurrence of problems in that surface area will be small, and there will be a decrease in adhesive force. If arithmetic mean roughness (Ra) exceeds 9.0 nm, there will be increase in the extent of surface irregularities, causing the surface to become nonuniform, and there is a possibility that there will be decrease in adhesion. It is more preferred that arithmetic mean roughness (Ra) of the inorganic thin film layer (D) side surface be not less than 4.7 nm, still more preferred that this be not less than 4.9 nm, particularly preferred that this be not less than 5.1 nm, and most preferred that this be not less than 5.3 nm.

To cause the arithmetic mean roughness (Ra) of the inorganic thin film layer (D) side surface to be not less than 4.5 nm but not greater than 9.0 nm, besides causing the arithmetic mean roughness (Ra) at the surface layer (B) of the substrate film to be within the aforementioned preferred range(s), adjustment may be carried out by varying whether additive(s) originating from the substrate are present, film cooling conditions during the operation in which the inorganic thin film is formed, thin film material(s), composition(s), film thickness(es), and/or the like.

Protective Layer

In accordance with the present invention, where further gas barrier performance is required or where printing or other such processing is required, a protective layer may be made to be present over the foregoing inorganic thin film layer (D). The inorganic thin film layer (D) is not a perfectly sealed film, there being tiny regions located sporadically therethroughout at which the material is deficient. By causing the inorganic thin film layer to be coated with a particular protective layer resin composition, described below, to form a protective layer thereover, deficient locations at the inorganic thin film layer are impregnated with resin present within the protective layer resin composition, as a result of which it is possible to obtain an effect whereby gas barrier properties are stabilized. In addition, by causing the protective layer itself to also employ material(s) having gas barrier properties, it is also possible to greatly improve the gas barrier performance of the laminated film. But note that attention should also be given to the fact that increase in the number of operations that will result from causing a protective layer to be provided will increase cost and may, depending on the materials used, have an impact on the environment. Furthermore, attention should also be given to the fact that the protective layer will cause changes in the values of surface roughness and other such physical properties.

It is preferred that the amount of protective layer attached thereto be 0.10 to 1.00 $(g/m^2)$. Because this will make it possible to control the protective layer so as to be uniform during coating thereof, the film that is produced will consequently have little coating nonuniformity and few defects. Furthermore, cohesive forces at the protective layer itself will also be improved, and adhesion between the inorganic thin film layer and the protective layer will be made more firm. It is preferred that the amount of protective layer attached thereto be not less than 0.13 $(g/m^2)$, more preferred that this be not less than 0.16 $(g/m^2)$, and still more preferred that this be not less than 0.19 $(g/m^2)$; and it is preferred that this be not greater than 0.97 $(g/m^2)$, more preferred that this be not greater than 0.94 $(g/m^2)$, and still more preferred that this be not greater than 0.91 $(g/m^2)$. When the amount of protective layer attached thereto exceeds 1.00 $(g/m^2)$, while gas barrier properties will be improved, because cohesive forces at the interior of the protective layer will be inadequate, and because there will also be a decrease in the uniformity of the protective layer, there will be occurrence of defects and/or nonuniformities in the external appearance of the coating, and there will also be situations in which gas barrier properties and/or adhesiveness cannot adequately be achieved. On the other hand, when film thickness of the protective layer is below 0.10 $(g/m^2)$, there is a possibility that it will not be possible to obtain adequate gas barrier properties and interlayer adhesion.

As the resin composition used at the protective layer formed at the surface of inorganic thin film layer (D) at a laminated film in accordance with the present invention, resins of the vinyl alcohol type, urethane type, polyester type, acrylic type, titanium type, isocyanate type, imine type, polybutadiene type, or the like, to which curing agent of the epoxy type, isocyanate type, melamine type, or the like has been added, may be cited.

There is no particular limitation with respect to the technique used to apply the protective layer resin composition so long as it is a method that causes this to be applied and a layer to be formed on the film surface. For example, gravure coating, reverse roll coating, wirewound bar coating, die coating, and/or other such ordinary coating methods may be employed.

When forming a protective layer, following application of the protective layer resin composition, it is preferred that this be heated and dried, at which time it is preferred that the drying temperature be 100° to 160° C, more preferred that this be 105° to 155° C, and still more preferred that this be 110° to 150° C. When drying temperature is below 100° C, there will be occurrence of inadequate drying at the protective layer, failure of film formation to proceed at the protective layer will cause decrease in cohesive forces and water-resistant adhesive properties, as a result of which there will be a possibility that barrier properties and/or ability to be cut by hand will decrease. On the other hand, when drying temperature exceeds 160° C, there is a possibility that too much heat will be applied to the film, the film will become brittle, puncture strength will decrease, and/or shrinkage will occur and workability will be made worse. In particular, by causing drying to take place at not less than 100° C or preferably not less than 110° C, because film formation at the protective layer will proceed effectively, causing increase in the area over which adhesive contact exists at the inorganic thin film layer and the resin of the protective layer, this will permit improvement in water-resistant adhesive properties. Because it will make it possible to obtain a uniform film, it will be particularly preferred if immediately following application of the protective film the solvent is first volatilized under comparatively low-temperature conditions on the order of 90° C, with drying being carried out thereafter at not less than 100° C. Furthermore, as distinct from drying, causing this to be subjected to additional heat treatment in as low-temperature a domain as possible will be even more effective in terms of causing film formation at the protective layer to proceed.

Packaging Material

Where a laminated film in accordance with the present invention is to be used as packaging material, it is preferred that this be fashioned into a laminated body in which there is formed therein a heat-sealable resin layer that may be referred to as a sealant. While the heat-sealable resin layer is ordinarily provided over the inorganic thin film layer, it is sometimes provided toward the exterior from the substrate film layer (the face on the side opposite the face at which the inorganic thin film is formed). Formation of the heat-sealable resin layer is ordinarily accomplished through use of the extruded lamination method or the dry lamination method. As thermoplastic polymer(s) for forming the heat-sealable resin layer, it is sufficient that adequate manifestation of sealant adhesive properties be permitted thereby, it being possible to use olefinic HDPE, LDPE, LLDPE, and other such polyethylene resins, polypropylene resin, ethylene-vinyl acetate copolymer, ethylene-α-olefin random copolymer, ionomer resin, and so forth. Thereamong, from the standpoints of endurance, seal strength, cost, and achieving monomaterial construction, LLDPE or polypropylene resins which are universal in terms of applications are particularly preferred. It is preferred that thickness of the sealant layer be 20 μm to 100 μm, still more preferred that this be 30 μm to 90 μm, and even more preferred that this be 40 μm to 80 μm. When thickness is less than 20 μm, it may be that it will not be possible to obtain adequate seal strength therefrom, and there is a possibility that the lack of resilient texture will make handling thereof difficult. On the other hand, when thickness exceeds 100 μm, besides the fact that its highly resilient texture will cause handling characteristics when used as a pouch to worsen, there is also a possibility that this would cause increase in cost.

Adhesive Layer

The adhesive layer used in the present invention may employ general-purpose adhesive(s) for lamination. For example, (non)solvent-type, water-soluble-type, and/or hot-melt-type adhesive(s) having primary constituent(s) of the poly(ester)urethane type, polyester type, polyamide type, epoxy type, poly(meth)acrylic type, polyethylene imine type, ethylene-(meth)acrylate type, polyvinyl acetate type, (modified) polyolefin type, polybutadiene type, wax type, casein type, and/or the like may be employed. Thereamong, based upon consideration of heat resistance and of flexibility such as will be capable of following changes in dimensions at the respective substrates, those of the urethane type or polyester type are preferred. As method for laminating the foregoing adhesive layer therewith, coating may, for example, be carried out using the direct gravure coating method, the reverse gravure coating method, the kiss coating method, the die coating method, the roll coating method, the dip coating method, the knife coating method, the spray coating method, the fontaine coating method, or other such method, it being preferred for adequate manifestation of adhesiveness that the amount coated thereon following drying thereof be 1 g/m$^2$ to 8 g/m$^2$. 2 g/m$^2$ to 7 g/m$^2$ is more preferred, and 3 g/m$^2$ to 6 g/m$^2$ is even more preferred. When the amount coated thereon is below 1 g/m$^2$, it will be difficult to achieve lamination over the entire face thereof, and adhesive forces will be reduced. Furthermore, above 8 g/m$^2$ or higher, it will take a long time for the film to cure completely, increasing the tendency for unreacted matter to remain, and causing decrease in adhesive forces.

Moreover, at a laminated film in accordance with the present invention, at least one or more layers of other plastic substrate(s), paper substrate(s), and/or printing layer(s) may be laminated therewith between the substrate film layer and the heat-sealable resin layer and/or toward the exterior therefrom.

As printing ink for forming the printing layer, printing inks that contain resin(s) of the water-soluble or solvent type may be favorably employed. As resins that may be used in printing inks here, acrylic-type resins, urethane-type resins, polyester-type resins, vinyl chloride-type resins, vinyl-acetate-copolymerized resins, and mixtures thereof may be listed as examples. The printing ink may be made to contain antistatic agent, light ray screening agent, ultraviolet light absorber, plasticizer, lubricity-increasing agent, filler, colorant, stabilizer, lubricant, antifoaming agent, crosslinking agent, antiblocking agent, antioxidant, and/or other such publicly known additive(s). As the printing method for causing the printing layer to be provided thereat, there being no particular limitation with respect thereto, the offset printing method, gravure printing method, screen printing method, or other such publicly known printing method may be employed. For drying of solvent following printing, hot air drying, hot roll drying, infrared drying, or other such publicly known drying method may be employed.

From the standpoint of ability to manifest satisfactory gas barrier properties, a laminated film in accordance with the present invention will preferably exhibit an oxygen permeability under conditions of 23° C and 65% RH that is not greater than 60 cc/m$^2$·d·atm. This may more preferably be made to be not greater than 50 cc/m$^2$·d·atm is more preferred, and may even more preferably be made to be not greater than 40 cc/m$^2$·d·atm. When oxygen permeability exceeds 60 cc/m$^2$·d·atm, it will be difficult to accommodate applications in which a high degree of gas barrier performance required. On the other hand, when oxygen permeability of any thereamong is below 0.1 cc/m$^2$·d·atm, while barrier performance will be excellent, because residual solvent will tend not to pass therethrough to the exterior of the pouch, and because there is a possibility that this could cause increase in the relative amount that migrates to the contents, it is not preferred. A preferred lower limit of the range in values for oxygen permeability is not less than 0.1 cc/m$^2$·d·atm.

From the standpoint of ability to manifest satisfactory gas barrier properties, a laminated body in accordance with the present invention will preferably exhibit a water vapor permeability of any thereamong under conditions of 40° C and 90% RH that is not greater than 4.0 g/m$^2$·d. This may more preferably be made to be not greater than 3.5 g/m$^2$·d is more preferred, and may even more preferably be made to be not greater than 3.0 g/m$^2$·d. When water vapor permeability exceeds 4.0 g/m$^2$·d, it will be difficult to accommodate applications in which a high degree of gas barrier performance required. On the other hand, when water vapor permeability of any thereamong is below 0.1 g/m$^2$, while barrier performance will be excellent, because residual solvent will tend not to pass therethrough to the exterior of the pouch, and because there is a possibility that this could cause increase in the relative amount that migrates to the contents, it is not preferred. A preferred lower limit of the range in values for water vapor permeability is not less than 0.1 g/m$^2$·d.

If the value of the oxygen permeability of a laminated film in accordance with the present invention when measured under conditions of 23° C and 65% RH is taken to be (A), and the value of the oxygen permeability thereof when measured under conditions of 23° C and 80% RH is taken to be (B), it is preferred that the percent deterioration in the barrier value under conditions of high temperature and high humidity as given by the following formula be not greater than 130%. Not greater than 125% is more preferred, and not greater than 120% is even more preferred. When the percent deterioration thereof is greater than 130%, there is a possibility that barrier performance would deteriorate if exposed to high humidity, and because this would limit the applications and environments in which it could be used, it is not preferred.

$$\text{Percent deterioration in barrier value at high temperature and high humidity (\%)}$$
$$= (B/A) \times 100 \qquad\qquad (\text{Formula 1})$$

At a laminated body in accordance with the present invention, it is preferred that lamination strength of any thereamong under conditions of 23° C and 65% RH be not less than 1.5 N/15 mm, more preferred that this be not less than 2.0 N/15 mm, and still more preferred that this be not less than 2.5 N/15 mm. When lamination strength is below 1.5 N/15 mm, flexural load and/or heat at the time of sealing may cause occurrence of delamination and deterioration in barrier properties, as a result of which there is a possibility that the contents may leak out therefrom. Moreover, there is also a possibility that there will be decrease in ability to be cut by hand.

Working Examples

Although the present invention is next described more specifically in terms of working examples, it should be understood that the present invention is not to be limited by the following examples. Note that evaluation of the film was carried out using the following measurement methods.

Physical Properties of Substrate Film

(1) Meso pentad fraction ([mmmm]; units = %)

Measurement of the meso pentad fraction was carried out using 13C-NMR. The meso pentad fraction was calculated in accordance with the method described at "Zambelli et al., Macromolecules, Volume No. 6, page 925 (1973)". 13C-NMR measurements were carried out at 110° C using an "AVANCE500" manufactured by Bruker Corporation after dissolving 200 mg of sample at 135° C in an 8:2 (by volume) liquid mixture of o-dichlorobenzene and deuterated benzene.

(2) Melt Flow Rate ([MFR] g/10 min)

Measurements were carried out at a temperature of 230° C and a load of 2.16 kgf in accordance with JIS K7210.

For resin raw material, the necessary amount was weighed out as obtained in pellet (powder) form.

For film, the necessary amount was cut out therefrom, and this was thereafter cut into a square sample that was used which was approximately 5 mm on a side.

(3) Molecular Weight and Molecular Weight Distribution

Molecular weight and molecular weight distribution of resin raw material and film were determined by gel permeation chromatography (GPC) using monodisperse polystyrene standards. Column, solvent, and other measurement conditions used for GPC measurements were as follows.

| | |
|---|---|
| Solvent: | 1,2,4-trichlorobenzene |
| Column: | TSKgel GMHHR-H(20)HT$\times$3 |
| Flow rate: | 1.0 ml/min |
| Detector: | RI |
| Measurement temperature: | 140 ° C |

Number-average molecular weight (Mn), mass-average molecular weight (Mw), and molecular weight distribution (Mw/Mn) were as respectively defined by the following formulas based on the number of molecules (Ni) of molecular weights (Mi) corresponding to respective eluted locations on GPC curves obtained by way of molecular weight calibration curves.

| | |
|---|---|
| Number-average molecular weight: | $Mn = \sum (Ni{\cdot}Mi) / \sum Ni$ |
| Mass-average molecular weight: | $Mw = \sum (Ni{\cdot}Mi^2) / \sum (Ni{\cdot}Mi)$ |
| Molecular weight distribution: | Mw/Mn |

In situations where the baseline was unclear, the baseline was set to be the range extending to the lowest location within the shoulder on the high-molecular-weight side of the nearest elution peak on the high-molecular-weight side of the elution peak of the standard substance.

(4) Melting Peak Temperature (° C) and Melting Peak Area (J/g)

A differential scanning calorimeter (DSC) manufactured by SII was used to carry out measurements on a 10-mg sample at a temperature rise rate of 20° C/min. Endothermic melting peak temperatures and melting peak areas were determined from DSC curves.

(5) Thickness ($\mu$m)

Thicknesses of respective layers at substrate layer (A) and surface layer (B) were measured by using a differential interference microscope to observe samples cut using a microtome from sections of biaxially oriented laminated polypropylenic film that had been embedded in modified urethane resin.

(6) Tensile Modulus of Elasticity (GPa)

Measurement was carried out in accordance with JIS K 7127. In both the machine direction and the transverse direction of the film, samples 10 mm in width and 180 mm in length were cut out therefrom using a razor and used as samples. After allowing these to stand for 12 hours in an environment that was 23° C and 65% RH, measurement was carried out in an environment that was 23° C and 65% RH under conditions such that chuck separation was 100 mm and stretching rate of 200 mm/min, the average of the results of measurements made during 5 trials being used. An Autograph AG5000A manufactured by Shimadzu Corporation was used as measurement apparatus.

(7) Thermal Shrinkage (%)

Measurement was carried out using the method below in accordance with JIS Z1712. In both the MD direction and the TD direction of the film, samples 20 mm in width and 200 mm in length were cut out therefrom, and these were heated for 5 minutes in a hot air oven at 150° C into which they had been placed in hanging fashion. The lengths before and after heating were measured, and the percent thermal shrinkage was determined by subtracting the length after heating from the length before heating, and expressing the difference in lengths as a percent (%) of the length before heating.

(8) Wetting Tension (mN/m)

Following aging of film for 24 hours at 23° C and 50% relative humidity, the corona-treated face of the film was measured using the following procedure in accordance with K 6768: 1999.

Step 1)

Measurements were carried out in a standard test chamber atmosphere (see JISK 7100) at a temperature of 23° C and a relative humidity of 50%.

Step 2)

Test piece was placed on top of the bed of hand coater (4.1), several drops of liquid test mixture were allowed to drip onto the test piece, and this was immediately spread by drawing the wirewound bar thereacross.
Where a cotton-tipped swab or brush was used to spread the liquid test mixture, the liquid was quickly made to spread so as to at least occupy an area that was not less than 6 cm$^2$. The amount of liquid used was such as to form a thin film without occurrence of puddling.
The liquid film formed by the liquid test mixture was observed in a well-lit location, wetting tension being judged based on the state of the liquid film after 3 seconds had elapsed. Wetting was judged to have occurred if the liquid film remained unbroken, having maintained the state in which it was coated thereon, following passage of not less than 3 seconds. When the wet state was maintained for 3 seconds or longer, testing proceeded to the next liquid mixture in the series in the direction of higher surface tension; and conversely, when the liquid film was broken after 3 seconds or less, testing proceeded to the next liquid mixture in the series in the direction of lower surface tension.
This sequence of operations was repeated until the liquid mixture capable of wetting the surface of the test piece for exactly 3 seconds was selected.

Step 3)

A new cotton-tipped swab was used for each test. Because the composition and surface tension of liquid remaining on brushes and wirewound bars will change as a result of evaporation thereof, these were washed in methanol and allowed to dry after each use.

Step 4)

The sequence of operations by which the liquid mixture capable of wetting the surface of the test piece for exactly 3 seconds was selected was repeated at least 3 times. The surface tension of the liquid mixture selected in this fashion was reported as the wetting tension of the film.

(9) Surface Resistance (Log S2)

Following aging of film for 24 hours at 23° C, the value of the surface resistance at the surface layer (B) face of the film was measured in accordance with JIS K6911.

(10) Air Purge Time (seconds)

As shown in FIG. 1, film 4 was placed on platen 1. Film retainer 2 was then placed atop film 4, and was secured thereover so as to secure film 4 while applying tension thereto. Film 5 was then placed atop film retainer 2, being placed over film 4 in such fashion as to cause the face thereof opposite the top face of film 4 as it lay atop platen 1 to face down. Film retainer 8 was then placed atop film 5, and screws 3 were further used to secure film retainers 8, 2 and platen 1.

Vacuum pump 6 and cavity 2a provided at film retainer 2 were then connected by way of pipe 7 and pores 2c provided at film retainer 2. In addition, vacuum pump 6 was driven, causing tension to be applied to film 5 as a result of its having been sucked into cavity 2a. Furthermore, the mutually overlapping faces of film 4 and film 5 were also simultaneously subjected to vacuum by way of pores 2d provided in circumferential arrangement at film retainer 2, causing film 4 and film 5 to begin to adhere starting from the peripheral portions of the overlapping faces thereof.

The fact that they were adhering could easily be determined by means of the interference fringes that were observable from above the overlapping faces. In addition, after interference fringes appeared at the peripheral portions of the overlapping faces of film 4 and film 5, the interference fringes spread across the front faces of the overlapping faces, the time (seconds) until this movement stopped being measured, this time (seconds) being taken to be the air purge time. Note that the two films were replaced and measurements were repeated for a total of 5 trials, the average value thereof being used. Summarizing, the shorter the time (seconds) the better were the winding characteristics of the film.

(11) Evaluation of Wrinkling When Wound into a Roll

The substrate film that was formed was wound into a roll of wound length 1000 m and width 500 mm, visual inspection being employed to evaluate wrinkles at the surface layer of the roll based on the following criteria. Those judged GOOD or FAIR were determined to have received a passing grade.

GOOD:	No wrinkles
FAIR:	Small wrinkles were present but application of tension of on the order of 20 N/m to unwound film caused wrinkles to disappear
BAD:	Large wrinkles were present that did not disappear despite application of tension of on the order of 20 N/m to unwound film

Physical Properties of Laminated film Following Lamination of Inorganic Thin Film

(12) Haze (%)

Measurements were carried out at 23° C in accordance with JIS K 7105. Measurements were carried out using a hazemeter (300A; manufactured by Nippon Denshoku Industries Co., Ltd.). Note that measurements were carried out twice, and the average thereof was determined.

(13) Composition and Thickness of Inorganic Thin Film Layer

An x-ray fluorescence analyzer ("ZSX100e" manufactured by Rigaku Corporation) was used to measure film thicknesses and compositions at the laminated films (following lamination of thin film) obtained at the Working Examples and Comparative Examples based on calibration curves that had been prepared in advance. Note that conditions employed at the x-ray excitation tube were 50 kV and 70 mA.

(14) Martens Hardness (N/mm$^2$)

A sample approximately 2 cm on a side was cut out from the laminated film that was obtained, contact adhesive was used to secure the face opposite the face that was to be measured to a glass plate of thickness approximately 1 mm, and this was thereafter conditioned by allowing this to stand for 12 hours in an environment that was 23° C and 50% RH. This sample was measured under the following measurement conditions pursuant to a method in accordance with ISO14577-1 (2002) using a dynamic ultramicrohardness tester ("DUH-211" manufactured by Shimadzu Corporation). Measurement was carried out 10 times, a different location on the film being used each time, the maximum and minimum values were discarded, and the average value of the remaining 8 points was calculated.

Measurement Conditions

Settings

· Measuring environment:	Temperature 23° C and relative humidity 50%

(continued)

| | |
|---|---|
| · Test mode: | Load-unload testing |
| · Indenter used: | Triangular pyramid indenter; dihedral angle 115° |
| · Elastic modulus of indenter: | $1.140 \times 106$ N/mm$^2$ |
| · Poisson's ratio of indenter: | 0.07 |
| · Cf - Ap and As correction: | Yes |

Conditions

| | |
|---|---|
| Test force: | 0.10 mN |
| Load application rate: | 0.0050 mN/sec |
| Load dwell time: | 5 sec |
| Unload dwell time: | 0 sec |

(15) Center Plane Average Roughness ([SRa] $\mu$m)

Measurement of the laminated film obtained was carried out using a three-dimensional profilometer (Model No. ET-30HK; manufactured by Kosaka Laboratory Ltd.) with a stylus pressure of 20 mg, a feed rate of 100 $\mu$m/second and a measurement length of 1 mm in the X direction, 99 recorded lines at a feed pitch of 2 $\mu$m in the Y direction, a magnification of 20000x in the height direction, and a cutoff of 80 $\mu$m to calculate center plane average roughness (SRa) in accordance with the definition of arithmetic mean roughness described at JIS-B0601 (1994).
For arithmetic mean roughness (SRa), 3 trials were respectively conducted, evaluation being carried out based on the average value thereof.

(16) Arithmetic Mean Roughness ([Ra] nm)

A scanning probe microscope ("SPM-9700" manufactured by Shimadzu Corporation) was used to measure the arithmetic mean roughness (Ra) of the laminated film obtained. Measurement was carried out within an area in which measurement was performed over a length that was 2 $\mu$m in each the X and Y directions while in dynamic mode, correction (tilt, line fitting, noise line elimination) of the image obtained was carried out, and this was thereafter determined in accordance with the definition of arithmetic mean roughness described at JIS-B0601 (1994).

(17) Water Contact Angle on Inorganic Thin Film Layer (D)

A goniometer (model: CAM200; sold by: Altech ALT; manufactured by: KSV Instruments Ltd. of Finland) was used to deposit a droplet of water on the laminated film (following lamination of inorganic thin film) obtained at each of the Working Examples and Comparative Examples, and to measure the contact angles thereof. The value used for contact angle was that which was read therefrom after 5 seconds after the droplet had been deposited thereon. FAMAS (Kyowa Interface Science Co., Ltd.) was used as analytic software. Detailed conditions under which measurements were performed are indicated below.

| | |
|---|---|
| Temperature and humidity: | 23° C; 65% |
| Measurement method: | Sessile drop method ($\theta$/2 method) |
| Size of droplet: | 7.0 $\mu$L |
| Diameter of needle: | 22G; inside diameter 0.4 mm |

(18) Oxygen Permeability Evaluation Method

For each of the respective Working Examples and Comparative Examples, an oxygen permeability measurement apparatus ("Ox-Tran (registered trademark) 1/50"; manufactured by Mocon) was used to measure the oxygen permeabilities of samples in the form of the laminated film obtained at the step in which inorganic thin film layer (D) had been laminated to the substrate film, and the laminated body, described below, in environments in which temperature was 23° C and humidity was 65% RH or 80% RH in accordance with the method at JIS-K7126 B. Note that measurement of oxygen permeability was carried out in the direction that tended to cause oxygen to pass therethrough from the substrate film side to the inorganic thin film layer side.

(19) Water Vapor Permeability Evaluation Method

For each of the respective Working Examples and Comparative Examples, a water vapor permeability measurement apparatus ("Permatran-W 3/33MG"; manufactured by Mocon) was used to measure the water vapor permeabilities of samples in the form of the laminated film obtained at the step in which inorganic thin film layer (D) had been laminated to the substrate film, and the laminated body, described below, in an environment in which temperature was 40° C and humidity was 90% RH in accordance with the method at JIS-K7129 B. Note that measurement of water vapor permeability was carried out in the direction that tended to cause water vapor to pass therethrough from the substrate film side to the inorganic thin film layer side.

Fabrication of Laminated Body

Following application of polyurethane-type adhesive (TM569/catRT37 manufactured by Toyo-Morton, Ltd.) to the laminated body obtained at each of the Working Examples and Comparative Examples in sufficient amount to cause thickness following 80° C drying treatment to be 3 $\mu$m, this was dry-laminated on a metal roller heated to 60° C with unstretched polypropylene film (P1128 manufactured by Toyobo Co., Ltd.; thickness 30 $\mu$m; taken to be CPP), and was made to undergo aging for 4 days at 40° C to obtain a gas barrier laminated body for evaluation (hereinafter sometimes referred to as "Laminated Body a").

(20) Lamination Strength Evaluation Method

Test pieces of width 15 mm and length 200 mm were cut from the laminated body fabricated above, and a Tensilon universal material test apparatus ("Tensilon UMT-II-500" manufactured by Toyo Baldwin) was used to measure lamination strength under conditions of temperature 23° C and relative humidity 65%. Note that measurement of lamination strength was carried out at an elongation rate of 200 mm/min, the laminated film layer and the heat-sealable resin layer of each of the respective laminated films obtained at the Working Examples and Comparative Examples being peeled apart at a peel angle of 90°, the strength when an eyedropper was used to drip water onto the location being peeled apart (with water), and the strength when this was not dripped thereonto (dry), being respectively measured.

Resin Raw Material and Substrate Film

Details regarding polypropylenic resin raw materials and substrate film forming conditions employed in the Working Examples and Comparative Examples below are shown in TABLES 1 through 3.

TABLE 1

| Polypropylenic resin | PP-1 | PP-2 | PP-3 |
|---|---|---|---|
| Monomer raw material | Propylene | Propylene | Propylene and ethylene |
| Resin stereoregularity (meso pentad fraction (%)) | 98.4 | 98.7 | Unmeasurable |
| Amount of copolymerized ethylene (mol%) | 0.0 | 0.0 | 3.0 |
| MFR (g/10 min; 230° C; 2.16 kgf) | 3.0 | 7.6 | 7.0 |
| Molecular weight (Mn) | 79,400 | 67,500 | 80,000 |
| Molecular weight (Mw) | 312,000 | 270,000 | 220,000 |
| Molecular weight distribution (Mw/Mn) | 3.9 | 4.0 | 2.7 |
| DSC melting peak temperature (° C) | 163.9 | 168.0 | 125.3 |
| DSC melting peak area (J/g) | 98.6 | 105.2 | 64.3 |

TABLE 2

| Masterbatch | A | B |
|---|---|---|
| Masterbatch product name | FTX0627G | MB77A |
| Antiblocking agent present in masterbatch | Silica particles | Polymethyl methacrylate particles |
| Average particle diameter of antiblocking agent ($\mu$m) | 2.7 | 1.4 |
| Antiblocking agent content within masterbatch (ppm weight) | 50000 | 200000 |
| MFR of polypropylene resin pres ent in masterbatch (g/10 min; 230° C; 2.16 kgf) | 3.0 | 3.0 |

TABLE 3

| Film forming conditions | a | b | c |
|---|---|---|---|
| Molten resin temperature (° C) | 250 | 250 | 250 |
| Cooling roller temperature (° C) | 30 | 30 | 30 |
| Machine direction stretching ratio (expressed as multiple) | 4.5 | 4.5 | 4.5 |
| Machine direction stretching temperature (° C) | 125 | 135 | 125 |
| Transverse direction stretching ratio (expressed as multiple) | 8.2 | 8.2 | 8.2 |
| Transverse direction stretching preheating temperature (° C) | 168 | 173 | 175 |
| Transverse direction stretching temperature (° C) | 155 | 164 | 166 |
| Heat setting temperature (° C) | 165 | 171 | 171 |
| Percent relaxation in transverse direction (%) | 6.7 | 6.7 | 6.7 |

Working Examples 1 and 6; Comparative Examples 2 and 3
Substrate layer (A) employed polypropylene homopolymer PP-1 indicated at TABLE 1.

Furthermore, surface layer (B) employed the following which were blended therein in the following ratio: 43.2 wt% of polypropylene homopolymer PP-1 indicated at TABLE 1; 52.0 wt% of ethylene-copolymerized polypropylene polymer PP-3 indicated at TABLE 1; and 4.8 wt% of Masterbatch A indicated at TABLE 2. At this time, the melt flow rate (g/10 min) of the polypropylenic resin composition making up surface layer (B) was 5.1.

Surface layer (C) employed the following which were blended therein in the following ratio: 93.6 wt% of polypropylene homopolymer PP-1 indicated at TABLE 1; and 6.4 wt% of Masterbatch A indicated at TABLE 2.

The respective resin raw materials were melted at 250° C, a 45-mm extruder being used for substrate layer (A), a 25-mm extruder being used for surface layer (B), and a 20-mm extruder being used for surface layer (C), these being coextruded in sheet-like fashion from a T die, being cooled and solidified in such fashion as to cause surface layer (B) came in contact with a cooling roller at 30° C, and thereafter being stretched by a factor of 4.5x in the machine direction (MD) at 125° C. Next, the two ends in the transverse direction (TD) of the film were gripped by clips within a tenter, this was made to undergo preheating at 168° C, following which it was stretched by a factor of 8.2x in the transverse direction (TD) at 155° C, and was made to undergo heat setting at 165° C while being allowed to relax by 6.7% in the transverse direction (TD). The film forming conditions at this time were film forming conditions "a".

In this way, a biaxially oriented polypropylenic film having the structure surface layer (B)/substrate layer (A)/surface layer (C) was obtained.

A corona treatment device manufactured by Softal Corona & Plasma GmbH was used to cause the surface at surface layer (B) of the biaxially oriented polypropylenic film to undergo corona treatment under conditions such that the value of the electric current applied was 0.75 A, following which this was rolled up using a winder. Thickness of the film that was obtained was 20 $\mu$m (the thicknesses of surface layer (B)/substrate layer (A)/surface layer (C) were 1.3 $\mu$m/17.7 $\mu$m/1.0 $\mu$m).

Working Example 2

Except for the fact that the amounts of resin expelled from the extruders were adjusted so as to cause the thickness of substrate layer (A) to be 15.1 μm and so as to cause the thickness of surface layer (B) to be 3.9 μm, operations were carried out under the same conditions as at Working Example 1 to obtain a 20-μm biaxially oriented polypropylenic film.

Working Example 3

Except for the fact that surface layer (B) employed 45.0 wt% of polypropylene homopolymer PP-1 indicated at TABLE 1, 52.0 wt% of ethylene-copolymerized polypropylene polymer PP-3 indicated at TABLE 1, and 3.0 wt% of Masterbatch A indicated at TABLE 2, these being blended therein in this ratio, operations were carried out under the same conditions as at Working Example 1 to obtain a 20-μm biaxially oriented polypropylenic film.

Working Example 4

Except for the fact that surface layer (B) employed 1.2 wt% of polypropylene homopolymer PP-1 indicated at TABLE 1, 94.0 wt% of ethylene-copolymerized polypropylene polymer PP-3 indicated at TABLE 1, and 4.8 wt% of Masterbatch A indicated at TABLE 2, these being blended therein in this ratio, operations were carried out under the same conditions as at Working Example 1 to obtain a 20-μm biaxially oriented polypropylenic film.

Working Example 5

Except for the fact that PP-2 indicated at TABLE 1 was used instead of polypropylene homopolymer PP-1 at substrate layer (A) and surface layer (C), and that "b" indicated at TABLE 3 was used instead of film forming conditions thereat, operations were carried out under the same conditions as at Working Example 1 to obtain a 20-μm biaxially oriented polypropylenic film.

Comparative Example 1

Except for the fact that surface layer (B) employed 95.2 wt% of polypropylene homopolymer PP-1 indicated at TABLE 1, and 4.8 wt% of Masterbatch A indicated at TABLE 2, these being blended therein in this ratio, operations were carried out under the same conditions as at Working Example 1 to obtain a 20-μm biaxially oriented polypropylenic film.

Comparative Example 4

Except for the fact that surface layer (B) employed 47.25 wt% of polypropylene homopolymer PP-1 indicated at TABLE 1, 52.00 wt% of ethylene-copolymerized polypropylene polymer PP-3 indicated at TABLE 1, and 0.75 wt% of Masterbatch B indicated at TABLE 2, these being blended therein in this ratio, the fact that surface layer (C) employed 98.4 wt% of polypropylene homopolymer PP-1 indicated at TABLE 1, and 1.60 wt% of Masterbatch B indicated at TABLE 2, these being blended therein in this ratio, and the fact that film formation was carried out in such fashion as to cause surface layer (C) to come in contact with the cooling roller, operations were carried out under the same conditions as at Working Example 1 to obtain a 20-μm biaxially oriented polypropylenic film.

Comparative Example 5

Except for the fact that substrate layer (A) employed 99.0 wt% of polypropylene homopolymer PP-1 indicated at TABLE 1, and 1.0 wt% of stearyldiethanolamine stearate (KYM-4K; Matsumoto Yushi Co., Ltd.) as antistatic agent, these being blended therein, operations were carried out under the same conditions as at Working Example 1 to obtain a 20-μm biaxially oriented polypropylenic film.

Comparative Example 6

Except for the fact that "c" indicated at TABLE 3 was used instead of film forming conditions thereat, operations were carried out under the same conditions as at Working Example 1 to obtain a 20-μm biaxially oriented polypropylenic film.

Raw materials, manufacturing methods, and physical properties of the films employed at the foregoing Working Examples and Comparative Examples are shown in TABLE 4 and TABLE 5.

Inorganic Thin Film Layer

The methods by which the inorganic thin film layers used in the respective Working Examples and Comparative Examples were prepared are listed below. Note that these were employed at Working Examples 1 through 6 and at Comparative Examples 1 and 4 through 6, and are shown in TABLE 3. Note that an inorganic thin film layer was not laminated therewith at Comparative Example 2.

Formation of Inorganic Thin Film Layer M-1

As Inorganic Thin Film Layer M-1, aluminum oxide was vapor-deposited over the substrate film layer. The method for vapor-depositing aluminum oxide on the substrate film layer was such that the film was mounted at the supply side of a continuous vacuum deposition apparatus, the film being wound into a rolled state after being fed therethrough by way of a metal cooling drum. At this time, the continuous vacuum deposition apparatus was evacuated to $10^{-4}$ Torr or less, metallic aluminum of purity 99.9% was loaded from a location below the cooling drum into a crucible made of aluminum, the metallic aluminum was heated and vaporized, being made to adhere to and be deposited upon the film as oxygen was supplied into this vapor, causing an oxidation reaction, to form an aluminum oxide film that was 10 nm in thickness.

Formation of Inorganic Thin Film Layer M-2

As Inorganic Thin Film Layer M-2, the electron beam vapor deposition method was used to form a composite oxide layer containing silicon dioxide and aluminum oxide over the substrate film layer. As vapor deposition source, $Al_2O_3$ (purity 99.9%) and $SiO_2$ (purity 99.9%) particles on the order of 3 mm to 5 mm were employed. Thickness of the inorganic thin film layer ($SiO_2/Al_2O_3$ composite oxide layer) at the film (film containing inorganic thin film layer/coating layer) obtained in this way was 13 nm. Furthermore, composition of this composite oxide layer was such that $SiO_2/Al_2O_3$ (mass% ratio) = 60/40.

Barrier Coating Layer E for Comparative Example 3

Details regarding the coating solution for Barrier Coating Layer E used at Comparative Example 3 are listed below.

Polyvinyl Alcohol Resin (A)

10 parts by mass of fully saponified polyvinyl alcohol resin (manufactured by Nippon Synthetic Chemical Co.; product name = G Polymer OKS8049Q; saponification 99.0% or higher; average degree of polymerization 450) was added to 90 parts by mass of purified water, this was heated to 80° C while agitating, agitation being carried out for approximately 1 hour thereafter. This was then cooled to normal temperature, as a result of which a more or less transparent polyvinyl alcohol solution (PVA Solution) having a solids content of 10% was obtained.

Coating Solution Used at Barrier Coating Layer E

Respective materials were mixed in the following ratios to prepare the coating liquid (resin composition for barrier coating layer).

| | |
|---|---|
| Deionized water | 35.00 mass% |
| Isopropyl alcohol | 15.00 mass% |
| Polyvinyl Alcohol Resin (A) | 50.00 mass% |

Coating of Film with Coating Solution (Lamination of Barrier Coating Layer E)

The gravure roll coating method was used to apply the coating solution prepared above to the corona-treated surface of the substrate film, and this was predried at 110° C, following which this underwent drying proper at 140° C to obtain Barrier Coating Layer E. The coated amount following drying was 0.25 g/m$^2$ (dry). This was thereafter made to undergo post-heating treatment for 2 days at 40° C.

Laminated films on which an inorganic thin film layer or barrier coating layer was provided over a substrate film were prepared in the manner described above. The laminated films obtained were subjected to various types of evaluation. Results are shown in TABLE 5.

TABLE 4

| | | | | Working Example 1 | Working Example 2 | Working Example 3 | Working Example 4 | Working Example 5 | Working Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|
| Substrate layer (A) | Raw material | PP-1 | wt% | 100.00 | 100.00 | 100.00 | 100.00 | 0.00 | 100.00 | 100.00 | 100.00 | 100.00 | 100.00 | 99.00 | 100.00 |
| | | PP-2 | wt% | 0.00 | 0.00 | 0.00 | 0.00 | 100.00 | 0.00 | 0.00 | 0.00 | 0.00 | 0.00 | 0.00 | 0.00 |
| | | Antistatic agent | wt% | 0.00 | 0.00 | 0.00 | 0.00 | 0.00 | 0.00 | 0.00 | 0.00 | 0.00 | 0.00 | 1.00 | 0.00 |
| | Thickness | | μm | 17.7 | 15.1 | 17.7 | 17.7 | 17.7 | 17.7 | 17.7 | 17.7 | 17.7 | 17.7 | 17.7 | 17.7 |
| Surface layer (B) | Raw material | PP-1 | wt% | 43.2 | 43.2 | 45.0 | 1.2 | 43.2 | 43.2 | 95.2 | 43.2 | 43.2 | 47.3 | 43.2 | 43.2 |
| | | PP-3 | wt% | 52.0 | 52.0 | 52.0 | 94.0 | 52.0 | 52.0 | 0.0 | 52.0 | 52.0 | 52.0 | 52.0 | 52.0 |
| | | Masterbatch containing antiblocking agent | wt% | 4.8 | 4.8 | 3.0 | 4.8 | 4.8 | 4.8 | 4.8 | 4.8 | 4.8 | 0.8 | 4.8 | 4.8 |
| | | Type of masterbatch | - | A | A | A | A | A | A | A | A | A | B | A | A |
| | | Antiblocking agent content | ppm weight | 2400 | 2400 | 1500 | 2400 | 2400 | 2400 | 2400 | 2400 | 2400 | 1500 | 2400 | 2400 |
| | Thickness | | μm | 1.3 | 3.9 | 1.3 | 1.3 | 1.3 | 1.3 | 1.3 | 1.3 | 1.3 | 1.3 | 1.3 | 1.3 |
| | Surface treatment | | | Corona treatment | Corona treatment | Corona treatment | Corona treatment | Corona treatment | Corona treatment | Corona treatment | Corona treatment | Corona treatment | Corona treatment | Corona treatment | Corona treatment |

| | | | | | | Working Example 1 | Working Example 2 | Working Example 3 | Working Example 4 | Working Example 5 | Working Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|
| Substrate film fabrication method | Surface layer (C) | Raw material | PP-1 | wt% | | 93.6 | 93.6 | 93.6 | 93.6 | 0.0 | 93.6 | 93.6 | 93.6 | 93.6 | 98.4 | 93.6 | 93.6 |
| | | | PP-2 | wt% | | 0.0 | 0.0 | 0.0 | 0.0 | 93.6 | 0.0 | 0.0 | 0.0 | 0.0 | 0.0 | 0.0 | 0.0 |
| | | | Masterbatch containing antiblocking agent | wt% | | 6.4 | 6.4 | 6.4 | 6.4 | 6.4 | 6.4 | 6.4 | 6.4 | 6.4 | 1.6 | 6.4 | 6.4 |
| | | | Type of masterbatch | - | | A | A | A | A | A | A | A | A | A | B | A | A |
| | | | Antiblocking agent content | ppm weight | | 3200 | 3200 | 3200 | 3200 | 3200 | 3200 | 3200 | 3200 | 3200 | 3200 | 3200 | 3200 |
| | | Thickness | | μm | | 1.0 | 1.0 | 1.0 | 1.0 | 1.0 | 1.0 | 1.0 | 1.0 | 1.0 | 1.0 | 1.0 | 1.0 |
| | | Surface treatment | | | | No treatment | No treatment | No treatment | No treatment | No treatment | No treatment | No treatment | No treatment | No treatment | No treatment | No treatment | No treatment |

EP 4 186 689 A1

(continued)

| | | | | Working Example 1 | Working Example 2 | Working Example 3 | Working Example 4 | Working Example 5 | Working Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|
| Amount blended within film | | PP-1 | wt% | 95.99 | 88.60 | 96.11 | 93.26 | 2.81 | 95.99 | 99.37 | 95.99 | 95.99 | 96.49 | 95.10 | 95.99 |
| | | PP-2 | wt% | 0.00 | 0.00 | 0.00 | 0.00 | 93.18 | 0.00 | 0.00 | 0.00 | 0.00 | 0.00 | 0.00 | 0.00 |
| | | PP-3 | wt% | 3.38 | 10.14 | 3.38 | 6.11 | 3.38 | 3.38 | 0.00 | 3.38 | 3.38 | 3.38 | 3.38 | 3.38 |
| | | Antistatic agent | wt% | 0.00 | 0.00 | 0.00 | 0.00 | 0.00 | 0.00 | 0.00 | 0.00 | 0.00 | 0.00 | 0.89 | 0.00 |
| | | Masterbatch containing antiblocking agent | wt% | 0.63 | 1.26 | 0.52 | 0.63 | 0.63 | 0.63 | 0.63 | 0.63 | 0.63 | 0.13 | 0.63 | 0.63 |
| | | Antiblocking agent content | ppm | 316 | 628 | 258 | 316 | 316 | 316 | 316 | 316 | 316 | 64 | 316 | 316 |
| | Filmforming conditions (see TABLE 3) | | | a | a | a | a | b | a | a | a | a | a | a | c |
| Inorganic thin film layer (D) fabrication method | | | | M-2 | M-2 | M-2 | M-2 | M-2 | M-1 | M-2 | None | Barrier Layer E used instead | M-2 | M-2 | M-2 |

TABLE 5

| Physical properties of substrate film | Unit | Working Example 1 | Working Example 2 | Working Example 3 | Working Example 4 | Working Example 5 | Working Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Thickness | μm | 20 | 20 | 20 | 20 | 20 | 20 | 20 | 20 | 20 | 20 | 20 | 20 |
| Tensile modulus of elasticity (machine direction) | Gpa | 2.3 | 2.2 | 2.2 | 2.5 | 2.6 | 2.3 | 2.3 | 2.3 | 2.3 | 2.3 | 2.1 | 2.4 |
| Tensile modulus of elasticity (transverse direction) | GPa | 4.6 | 4.5 | 4.7 | 4.8 | 5.3 | 4.6 | 4.6 | 4.6 | 4.6 | 4.5 | 4.4 | 4.9 |
| Thermal shrinkage at 150° C (machine direction) | % | 8.7 | 10.8 | 10.0 | 10.1 | 3.3 | 8.7 | 9.1 | 8.7 | 8.7 | 8.4 | 9.7 | 8.0 |
| Thermal shrinkage at 150° C (transverse direction) | % | 16.8 | 18.5 | 21.7 | 19.8 | 3.7 | 16.8 | 18.2 | 16.8 | 16.8 | 15.2 | 17.2 | 13.7 |
| Arithmetic mean roughness Ra (B layer) | nm | 4.3 | 4.8 | 4.1 | 5.0 | 4.4 | 4.3 | 2.2 | - | - | 5.9 | 3.8 | 5.2 |
| Wetting tension (B layer) | mN/m | 43 | 43 | 42 | 43 | 42 | 43 | 39 | 43 | 43 | 41 | 39 | 41 |

(continued)

| | | Working Example 1 | Working Example 2 | Working Example 3 | Working Example 4 | Working Example 5 | Working Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Surface resistance (B layer) | Lg Q | 152 | 15.4 | 15.5 | 15.5 | 15.4 | 15.2 | 15.4 | 15.2 | 15.2 | 15.5 | 13.2 | 15.3 |
| Air purge time (B layer/C layer) | seconds | 2.5 | 2.8 | 3.5 | 2.6 | 2.2 | 2.5 | 3.8 | 2.5 | 2.5 | 3.0 | 2.4 | 2.7 |
| Martens hardness (C layer) | N/mm2 | 300 | 290 | 280 | 290 | 320 | 300 | 300 | 300 | 300 | 290 | 275 | 310 |
| Center plane average roughness SRa (C layer) | μm | 0.034 | 0.033 | 0.031 | 0.027 | 0.030 | 0.034 | 0.023 | 0.034 | 0.034 | 0.028 | 0.024 | 0.028 |
| Evaluation of wrinkling when wound into a roll | - | GOOD | GOOD | FAIR | GOOD | GOOD | GOOD | GOOD | GOOD | GOOD | GOOD | GOOD | GOOD |
| Haze | 96 | 2.7 | 2.8 | 2.6 | 2.9 | 3.3 | 2.7 | 2.3 | 2.7 | 2.7 | 2.9 | 3.4 | 6.2 |
| Martens hardness (Surface on Inorganic thin film layer (D) side) | N/mm2 | 276 | 285 | 251 | 236 | 265 | 270 | 324 | - | - | 270 | 344 | 268 |

(continued)

| | | Working Example 1 | Working Example 2 | Working Example 3 | Working Example 4 | Working Example 5 | Working Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Physical properties of laminated film | Center plane average roughness SRa (Surface on Inorganic thin film layer (D) side) μm | 0.033 | 0.036 | 0.022 | 0.036 | 0.031 | 0.032 | 0.027 | - | | 0.041 | 0.037 | 0.037 |
| | Arithmetic mean roughness Ra (Surface on Inorganic thin film layer (D) side) nm | 6.6 | 7.1 | 6.2 | 7.5 | 8.2 | 6.0 | 4.0 | - | - | 9.5 | 10.0 | 9.1 |
| | Water contact angle ° | 40.0 | 40.0 | 48.0 | 35.0 | 45.0 | 63.0 | 81.0 | - | - | 50.0 | 100.0 | 50.0 |
| | Oxygen permeability cc/m²-d-ty | 30 | 35 | 28 | 40 | 25 | 46 | 18 | >500 | 2 | 19 | 50 | 32 |
| | Water vapor permeability g/m2/day | 2.5 | 3.4 | 2.5 | 3.5 | 2.2 | 2.1 | 2.3 | 4.5 | 4.7 | 2.4 | 4.0 | 3.4 |

| | | | Work-ing Example 1 | Work-ing Example 2 | Work-ing Example 3 | Work-ing Example 4 | Work-ing Example 5 | Work-ing Example 6 | Compara-tive Example 1 | Compara-tive Example 2 | Compara-tive Example 3 | Compara-tive Example 4 | Compara-tive Example 5 | Compara-tive Example 6 |
|---|---|---|---|---|---|---|---|---|---|---|---|---|---|---|
| | Percent de-terioration of barrier at high humidity | % | 110 | 110 | 110 | 108 | 110 | 105 | 110 | Unmeasurable | 1100 | 110 | 140 | 110 |
| Laminated film Quality of laminated structure | Oxygen permeabili-ty | cc/m²·d· | 15 | 21 | 14 | 29 | 10 | 34 | 18 | 500> | 2 | 19 | 50 | 32 |
| | Water va-por perme-abliity | g/m2/day | 1.9 | 2.9 | 1.9 | 2.5 | 1.6 | 1.8 | 2.3 | 4.5 | 4.7 | 2.4 | 4.0 | 3.4 |
| | Lamination strength (dry) | N/15mm | 4.6 | 2.9 | 4.3 | 3.7 | 4.0 | 4.6 | 0.4 | 3.8 | 4.6 | 1.6 | 2.5 | 0.9 |
| | Lamina-tion strength (with wa-ter) | N/15mm | 2.3 | 2.7 | 3.8 | 3.2 | 3.1 | 2.3 | 0.3 | 3.5 | 0.5 | 1.3 | 2.7 | 0.7 |

INDUSTRIAL UTILITY

The present invention makes it possible to provide a laminated film that is a film permitting formation of a laminate constitution constituted almost completely of a single type of resin having little environmental impact made up primarily of polypropylene film, and that has capabilities as required for adhesive properties and gas barrier properties sought for packaging materials. Moreover, because a laminated film in accordance with the present invention can be easily manufactured, having excellent workability and requiring a small number of processing operations, it is excellent in terms of both economical qualities and manufacturing stability, and makes it possible to provide a gas barrier film having homogeneous characteristics.

EXPLANATION OF REFERENCE NUMERALS

1...platen; 2, 8...film retainer; 2a...groove; 2c...holes; 2d...pores; 3...screw; 4, 5...film; 6...vacuum pump; 7...pipe; X...location where films overlap.

**Claims**

1. A laminated film comprising a surface layer (B) at a surface on one side of a substrate layer (A) comprising a polypropylenic resin as primary constituent, and a surface layer (C) at a surface on the other side of the substrate layer (A), and in which an inorganic thin film layer (D) is further laminated over the surface layer (B), the laminated film being **characterized in that** haze of the laminated film is not greater than 5%, and **in that** a surface on the inorganic thin film layer (D) side of the laminated film satisfies conditions (I) through (IV), below;

   (I) arithmetic mean roughness (Ra) as measured by a scanning probe microscope is not less than 4.5 nm but not greater than 9.0 nm;
   (II) Martens hardness is not greater than 310 N/mm$^2$;
   (III) water contact angle is not greater than 75°; and
   (IV) center plane average roughness (SRa) as measured by a three-dimensional profilometer is not less than 0.010 $\mu$m but not greater than 0.040 $\mu$m.

2. The laminated film according to claim 1 **characterized in that** oxygen permeability of the laminated film in an environment that is 23° C and 65% RH is not greater than 60 cc/m$^2$·d·atm; and water vapor permeability thereof in an environment that is 40° C and 90% RH is not greater than 4 g/m$^2$·d.

3. The laminated film according to claim 1 or 2 **characterized in that** when a value of oxygen permeability of the laminated film as measured under conditions of 23° C and 65% RH is taken to be (A), and when a value of oxygen permeability thereof as measured under conditions of 23° C and 80% RH is taken to be (B), percent deterioration in barrier value under conditions of high temperature and high humidity as given by the following formula is not greater than 130%;

$$\text{Percent deterioration in barrier value at high temperature and high humidity (\%)}$$
$$= (B/A) \times 100 \qquad \text{(Formula 1)}.$$

4. The laminated film according to any of claims 1 through 4 **characterized in that** center plane average roughness (SRa) as measured by a three-dimensional profilometer at a surface at the surface layer (C) side of the laminated film is not less than 0.020 $\mu$m.

5. The laminated film according to any of claims 1 through 5 **characterized in that** Martens hardness of a surface at the surface layer (C) side of the laminated film is not less than 270 N/mm$^2$.

6. The laminated film according to any of claims 1 through 6 wherein thickness of the laminated film is 9 $\mu$m to 200 $\mu$m.

7. Packaging material in which an olefinic sealant layer is laminated to one face of the laminated film according to any of claims 1 through 7.

Fig.1

## INTERNATIONAL SEARCH REPORT

| International application No. |
|---|
| PCT/JP2021/026453 |

A.  CLASSIFICATION OF SUBJECT MATTER
Int. Cl. B32B9/00(2006.01)i, B32B27/32(2006.01)i, B65D65/40(2006.01)i
FI: B32B27/32, B32B9/00 A, B65D65/40 D

According to International Patent Classification (IPC) or to both national classification and IPC

B.  FIELDS SEARCHED

Minimum documentation searched (classification system followed by classification symbols)
Int. Cl. B32B9/00, B32B27/32, B65D65/40

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | WO 2018/142983 A1 (TOYOBO CO., LTD.) 09 August 2018 (2018-08-09), entire text | 1-7 |
| A | WO 2017/221781 A1 (TOYOBO CO., LTD.) 28 December 2017 (2017-12-28), entire text | 1-7 |
| A | JP 2006-326925 A (OKAMOTO IND INC.) 07 December 2006 (2006-12-07), entire text, all drawings | 1-7 |
| A | JP 2000-52501 A (KURARAY CO., LTD.) 22 February 2000 (2000-02-22), entire text | 1-7 |
| A | JP 4-359033 A (DAICEL CHEMICAL INDUSTRIES, LTD.) 11 December 1992 (1992-12-11), entire text, all drawings | 1-7 |

☒  Further documents are listed in the continuation of Box C.     ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02.09.2021 | 14.09.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

Form PCT/ISA/210 (continuation of second sheet) (January 2015)

**INTERNATIONAL SEARCH REPORT**

| International application No. |
|---|
| PCT/JP2021/026453 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-231221 A (DAICEL CHEMICAL INDUSTRIES, LTD.) 19 August 2003 (2003-08-19), entire text | 1-7 |
| A | WO 2007/094072 A1 (TORAY INDUSTRIES, INC.) 23 August 2007 (2007-08-23), entire text, all drawings | 1-7 |

INTERNATIONAL SEARCH REPORT
Information on patent family members

International application No.

PCT/JP2021/026453

| Patent Documents referred to in the Report | Publication Date | Patent Family | Publication Date |
|---|---|---|---|
| WO 2018/142983 A1 | 09.08.2018 | KR 10-2019-0111975 A<br>entire text<br>TW 201801928 A<br>CN 108884246 A<br>KR 10-2018-0128027 A<br>TW 201834861 A | |
| WO 2017/221781 A1 | 28.12.2017 | CN 109311273 A<br>entire text<br>KR 10-2019-0020763 A<br>TW 201815586 A | |
| JP 2006-326925 A | 07.12.2006 | (Family: none) | |
| JP 2000-52501 A | 22.02.2000 | US 6303199 B1<br>entire text<br>EP 962506 A1<br>KR 10-2000-0005830 A<br>CN 1237605 A | |
| JP 4-359033 A | 11.12.1992 | (Family: none) | |
| JP 2003-231221 A | 19.08.2003 | (Family: none) | |
| WO 2007/094072 A1 | 23.08.2007 | US 2009/0136714 A1<br>entire text, all<br>drawings<br>EP 1985649 A1<br>CN 101374891 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000052501 A
- JP H41992359033 A
- JP 2003231221 A
- WO 2017221781 A
- WO 2007094072 A
- WO 2018142983 A

**Non-patent literature cited in the description**

- **ZAMBELLI et al.** *Macromolecules,* 1973, vol. 6, 925